# EUROPEAN PATENT SPECIFICATION

(11) **EP 1 390 239 B1**
(45) Date of publication and mention of the grant of the patent: **22.03.2006**
(21) Application number: 02714993.9
(22) Date of filing: 19.02.2002
(51) Int. Cl.: B60R 21/16

(54) **AIR BAG TETHER RELEASE ASSEMBLY**
AIRBAGHALTESEILFREIGABEANORDNUNG
SYSTEME DE RELACHEMENT DES SANGLES DE RETENUE D'UN COUSSIN GONFLABLE

(30) Priority: 27.02.2001 US 271833 P
(43) Date of publication of application: 25.02.2004
(73) Proprietor: Delphi Technologies, Inc., Troy, MI 48007-5052 (US)
(72) Inventor: DUNKLE, Stephanie L., Sprongboro, OH 45066 (US); WINTERS, Mark, Troy, OH 45473 (US); HAWTHORN, Laura, Adelle, Tipp City, OH 45371 (US); PINSENSCHAUM, Ryan, Todd, Vandalia, OH 45377 (US); SCHATZ, Patrick, W., Lebanon, OH 45036 (US); KNEISLY, Ann, L,, Dayton, OH 45459 (US); RYAN, Shawn, Gregory, Dayton, OH 45410 (US)
(74) Representative: Denton, Michael John
(86) International application number: PCT/US2002/005740
(87) International publication number: WO 2002/068249

(56) References cited:
- WO-A-01/34436
- US-A- 5 707 078
- US-A- 5 709 405
- US-A- 5 762 367
- US-A- 6 039 346
- US-A- 6 123 358
- US-B1- 6 334 627

## Description

### TECHNICAL FIELD

This invention relates generally to an air bag assembly, and more particularly to an air bag assembly capable of variable expansion by selective retention or extension-inducing release of restraining tether elements.

### BACKGROUND OF THE INVENTION

It is well known to provide an air bag assembly including an inflatable air bag cushion for protecting the occupants of a transportation vehicle. In an automotive vehicle such air bag assemblies are typically located within the hub of the steering wheel and in a recess in the instrument panel for protection of the vehicle occupants seated in opposing relation to such assemblies. Additional air bag assemblies may be located within the seats and/or door panels for protection of the occupants during a side-impact event.

Air bag assemblies typically include an inflatable cushion in fluid communication with a gas emitting inflator. Upon sensing certain predetermined vehicle conditions, such as a certain level of vehicle deceleration, the inflator discharges a fixed amount of inflator gas thereby forcing the air bag into a deployed position. The inflator gas occupies the available volume within the air bag cushion thereby forcing the air bag cushion to expand outwardly to the extent permitted by its construction. As the occupant comes into contact with the expanded air bag, the inflator gas is forced out of the air bag thereby dissipating the kinetic energy of the occupant.

Absent restraint, an inflated body tends to assume a generally spherical profile. In order to provide control over the inflated shape of the air bag cushion, it is known to utilize tethering elements in the form of straps or webs extending between surfaces of the air bag cushion to thereby hold the surfaces in fixed orientation relative to one another upon inflation. The selection and length of such tethering elements can thus be used to establish a desired inflated profile. However, once the tethering elements are attached in fixed relation to the surface of the air bag cushion, the inflated geometry of the cushion is likewise fixed and is not subject to adjustment.

It has been recognized that the preferred inflated profile of the air bag cushion may vary depending upon the severity of the activating impact event and/or upon the size and position of the occupant to be protected. Thus, the ability to effectively control the inflation characteristics of the air bag cushion is potentially desirable. In order to provide a degree of control over the inflated profile of the air bag cushion it is known to use an inflator that has varied levels or stages of inflator gas output in response to the sensing of different vehicle occupant conditions. Thus, it is generally known in the prior art to utilize so-called "dual-stage" inflators that discharge predetermined amounts of gas at one or two levels. However, these "dual-stage" inflators are more complex than typical inflators and have the limitation of typically providing only discrete levels of gas output. Moreover, the use of such "dual-stage" inflators provides control over only the amount of inflator gas which is discharged and does not provide control over the expanded geometry of the inflated air bag cushion. That is, due to the compressible nature of the inflation gas, so long as the air bag has a fixed volumetric capacity, the inflator gas will tend to fill that capacity and the expanded configuration of the air bag will be generally the same although the pressure may vary.

In order to provide an additional level of control over the air bag performance it has been suggested to utilize air bag cushions which incorporate sewn or woven in seams within the air bag to control the expanded geometry of the inflated air bag. Such seams separate upon the introduction of pressures exceeding a certain level thereby freeing the air bag cushion from the restraint imposed by the seams at lower pressures. In order for such break-away seams to provide controlled expansion, the introduction of such seams must be carried out with substantial precision such that seam separation will occur in a highly reproducible and predictable manner. In some instances, such requisite precision and reproducibility may be difficult to achieve. Moreover, even when such break-away seams are utilized, the expansion which occurs may be in all directions. In some applications it is believed that preferential expansion in the depth of the air bag (i.e. towards the occupant to be protected) may be desirable.

In order to address the desire to provide enhanced control over the final inflated profile of the air bag, it has been proposed to utilize release mechanisms to hold tether straps in place under normal conditions and to release the straps in situations where an extended profile is desired. Several of such release mechanisms are illustrated and described in U. S. Patent 5,887,894 to Castagner et al. the contents of which are incorporated by reference as if fully set forth herein.

### SUMMARY OF THE INVENTION

The present invention in its various aspects is as set out in the accompanying claims.

This invention provides advantages and alternatives over the prior art by providing a release mechanism of efficient construction and operation to hold restraining air bag tethers in place under a first set of predetermined conditions and to extend such tethers under a second set of predetermined conditions. The extension of the restraining tethers may be carried out in conjunction with the delivery of an increased volume of inflating gas to the air bag cushion. The air bag assembly may utilize a single stage inflator in conjunction with a variable inflation device to effect delivery of a proper volume of inflation gas.

### BRIEF DESCRIPTION OF THE DRAWINGS

The present invention will now be described by way of example only, with reference to the accompanying drawings which constitute a part of the specification herein and in which:
FIG. 1 is a cut-away view of a vehicle interior showing an air bag cushion in a stored undeployed state in opposing relation to a vehicle occupant;
FIG. 2A is a view similar to FIG. 1 illustrating an air bag cushion in a deployed state restrained by an internal tether arrangement;
FIG. 2B is a view similar to FIG. 2A wherein the tether arrangement is released to a second restrained state to permit enhanced expansion of the air bag cushion towards a vehicle occupant;
FIG. 3A is an exploded perspective view of a variable inflation device and cooperative tether restraint assembly;
FIG. 3B is a cut-away side view of an air bag assembly incorporating the variable inflation device and cooperative tether restraint assembly illustrated in FIG. 3A;
FIG. 4A is an exploded perspective view of a variable inflation device and cooperative tether restraint assembly;
FIG. 4B is a cut-away side view of an air bag assembly incorporating the variable inflation device and cooperative tether restraint assembly of FIG. 4A;
FIG. 5A is an exploded perspective view of a variable inflation device and a cooperative tether restraint assembly;
FIG. 5B is a cut-away side view of an air bag assembly incorporating the variable inflation device and cooperative tether restraint assembly illustrated in FIG. 5A;
FIG. 6A is cut-away end view of an air bag module assembly incorporating a variable inflation device and a cooperating tether restraint assembly prior to activation of the variable inflation device;
FIG. 6B is a view similar to FIG. 6A following activation of the variable inflation device and corresponding release of a restrained tethering element to an increased operative length;
FIG. 7A is a view similar to FIG. 6A illustrating an alternative arrangement of a variable inflation device and cooperative tether restraint assembly prior to activation of the variable inflation device;
FIG. 7B is a view similar to FIG. 7A following activation of the variable inflation device and corresponding release of a restrained tethering element to an increased operative length;
FIG. 8A is a view similar to FIG. 6A illustrating a variable inflation device and a cooperative tether restraint assembly prior to activation of the variable inflation device;
FIG. 8B is a view similar to FIG. 8A following activation of the variable inflation device and release of a restraining tether from the tether restraint assembly to an increased operative length;
FIG. 9A is a view similar to FIG. 6A illustrating a variable inflation device and a cooperative tether restraint assembly prior to activation of the variable inflation device;
FIG. 9B is a view taken along line 9B-9B in FIG. 9A illustrating a tether holding hook arrangement;
FIG. 9C is a view similar to FIG. 9B illustrating an alternative tether holding hook arrangement;
FIG. 9D is a view similar to FIG. 9A following activation of the variable inflation device and release of the cooperative tether restraint assembly to an increased operative length;
FIG. 10A is an elevation exploded perspective view of a variable inflation device and a cooperative tether restraint assembly incorporating a side mounted slide;
FIG. 10B is a view of the side mounted slide in FIG. 10A in a tether restraining position;
FIG. 10C is a view similar to FIG. 10B with the side mounted slide in the tether release position;
FIG. 11A is an elevation exploded perspective view of a variable inflation device and a cooperative tether restraint assembly incorporating a side mounted slide;
FIG. 11B is a view of the side mounted slide in FIG. 10A in a tether restraining position;
FIG. 11C is a sectional side view taken through FIG. 11B;
FIG. 11D is a view similar to FIG. 11C with the side mounted slide in the tether release position;
FIG. 12A is cut-away end view of an air bag module assembly incorporating a variable inflation device and a cooperating tether restraint incorporating a rotating vent blocking element prior to activation of the variable inflation device;
FIG. 12B is a view similar to FIG. 12A following activation of the variable inflation device and corresponding release of a restrained tethering element to an increased operative length;

### DESCRIPTION OF THE PREFERRED EMBODIMENTS

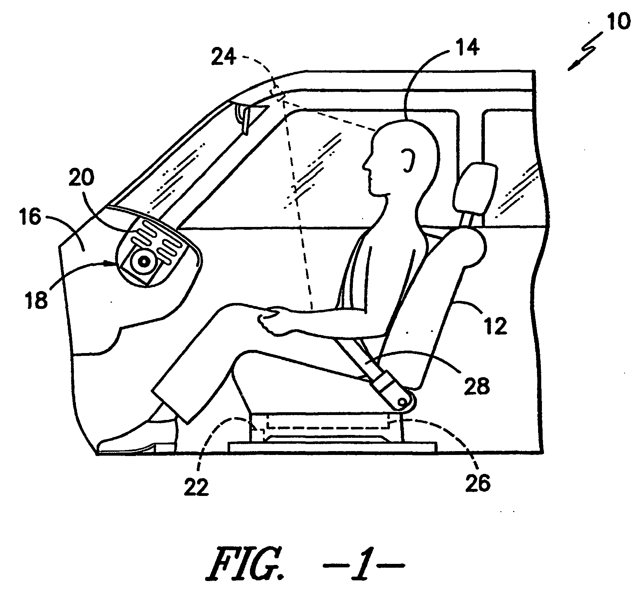

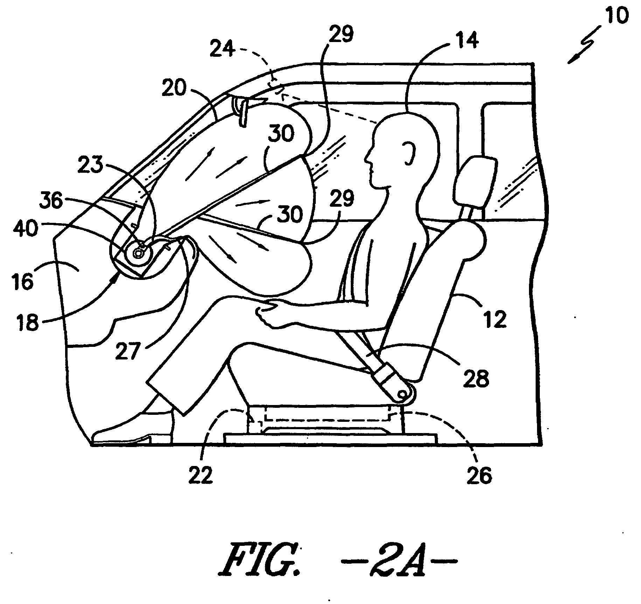

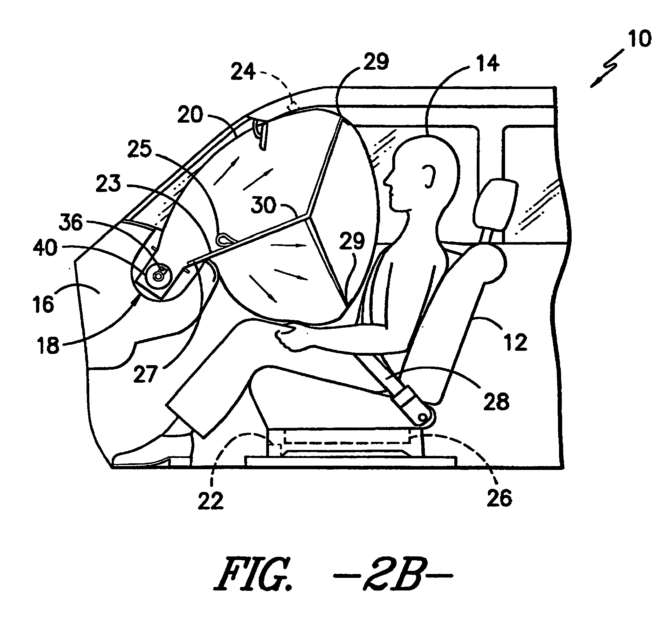

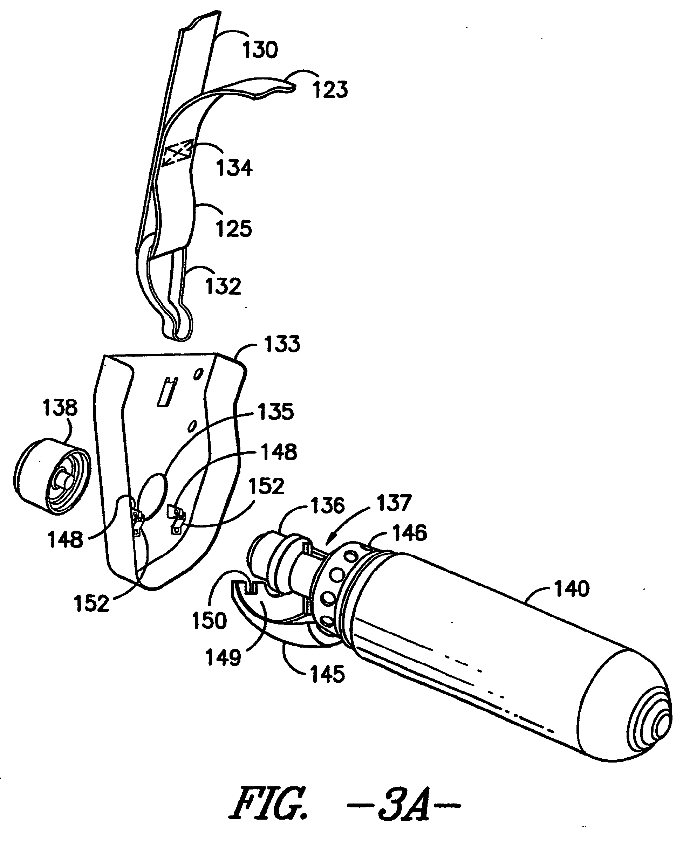

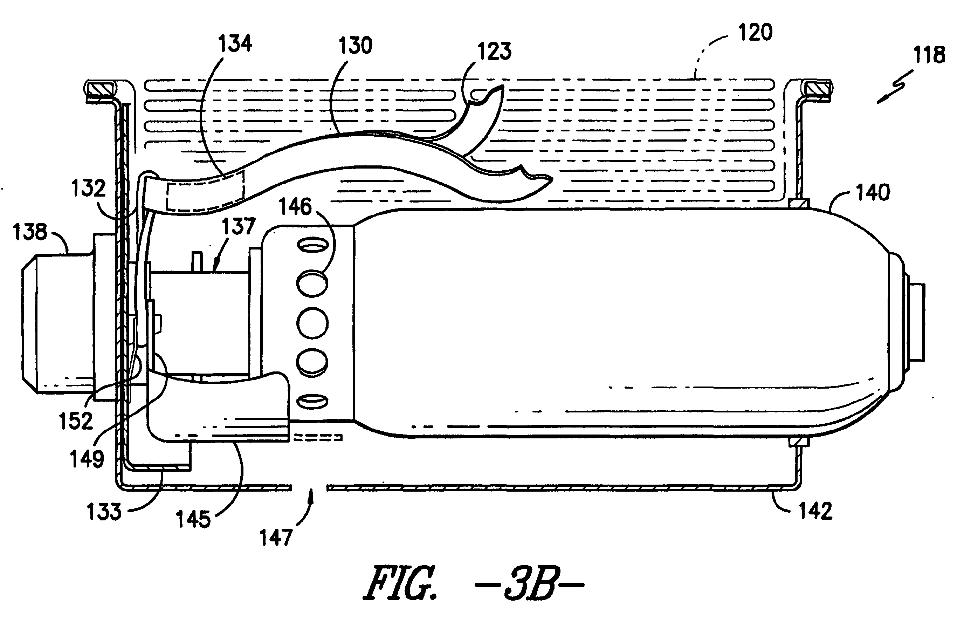

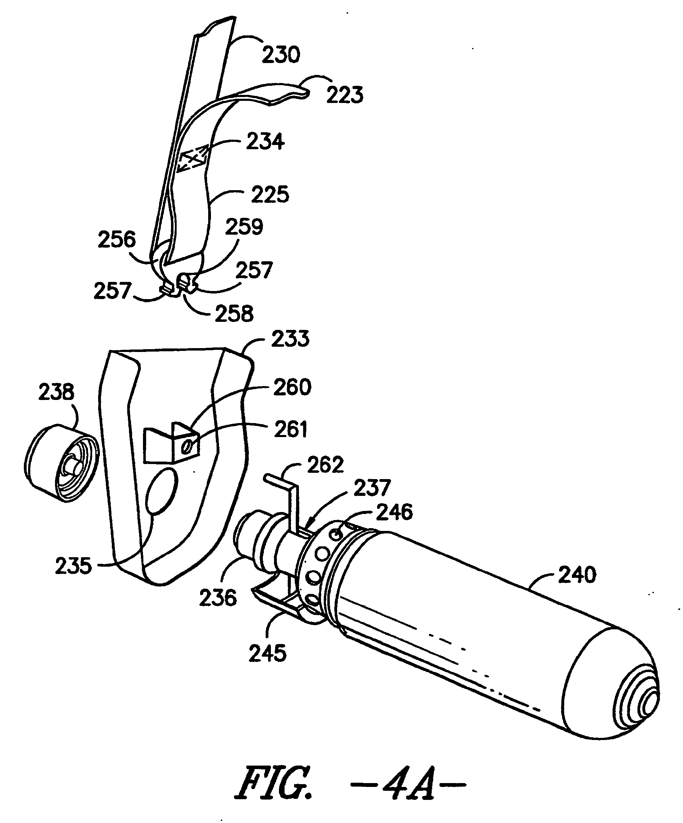

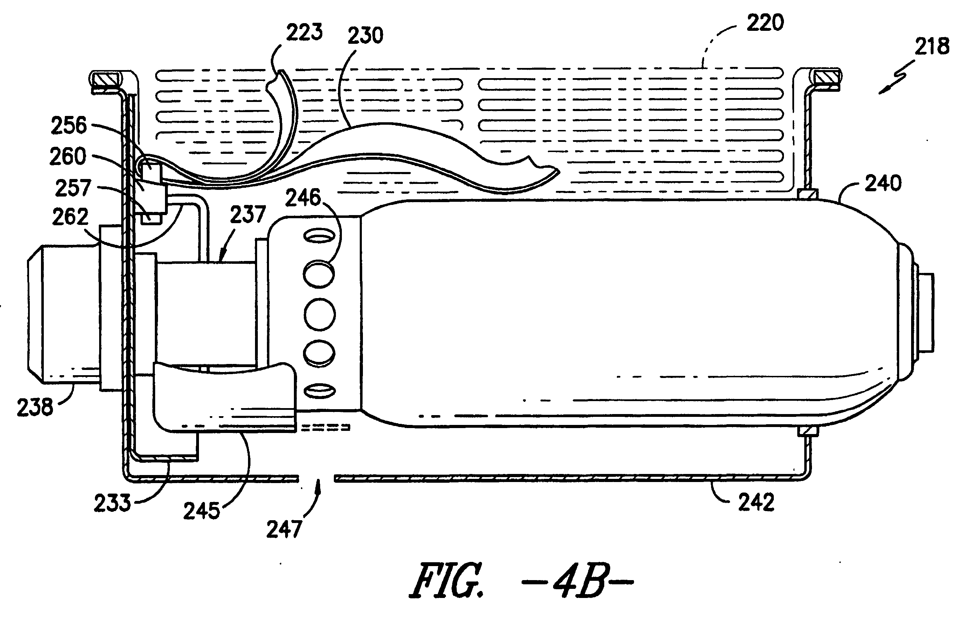

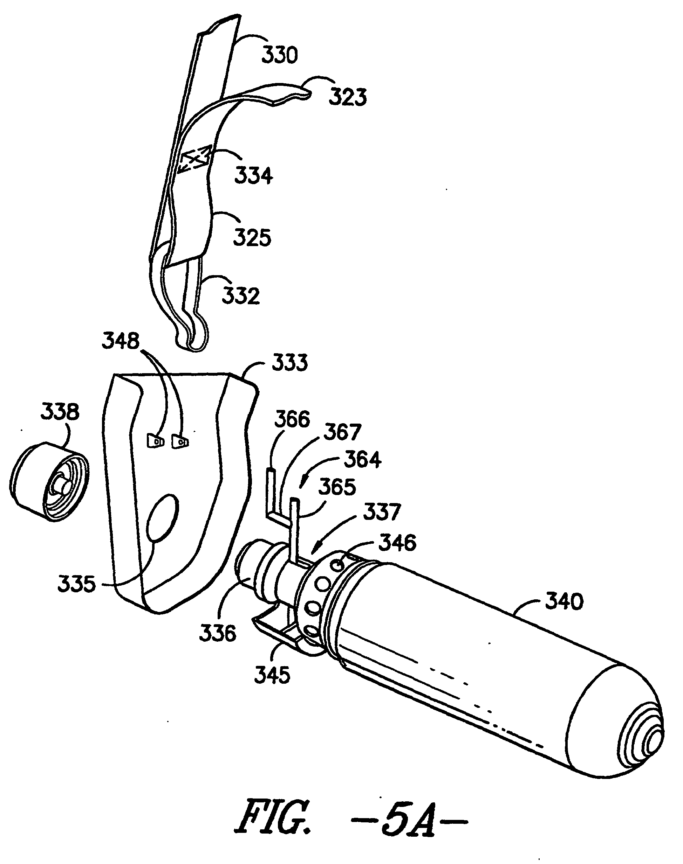

Reference will now be made to the drawings, wherein to the extent possible, like reference numerals are utilized to designate like components throughout the various views. In FIG. 1 a vehicle 10 is shown including a seating structure 12 which supports an occupant 14 in generally opposing relation to an instrument panel 16. An air bag assembly 18 including an air bag cushion 20 is housed within the instrument panel 16 for outward deployment towards the occupant 14 in the event of a collision.

While the air bag assembly 18 and corresponding air bag cushion 20 are illustrated for descriptive purposes in relation to a vehicle passenger, it is to be understood that the present invention is in no way to be limited to a passenger side configuration. On the contrary, it is contemplated that the present invention may have applicability to air bag deployment in opposing relation to the operator (not shown) of the vehicle 10 as well as in relation to air bags deployed from other regions within the vehicle interior.

It is contemplated that the vehicle 10 may include a seat position sensor 22 to detect the position of the occupant 14 relative to the air bag assembly 18. It is further contemplated that the vehicle 10 may include additional position sensors such as an optical scanner 24 or the like to measure both the volume and position of the occupant to be protected. The vehicle 10 may also be provided with a scale 26 within the seating structure 12 so as to provide additional data regarding the load to which the inflatable air bag cushion 20 may be subjected upon impact by the occupant 14. It is additionally contemplated that the seating structure 12 may be provided with sensing elements to measure the degree to which the seating structure is reclined. The vehicle 10 may also be provided with sensors to determine and communicate whether or not the occupant is utilizing the recommended seat belt structures 28. The data so collected may be utilized to determine the desirable expanded profile characteristics for the air bag cushion 20 in a given situation.

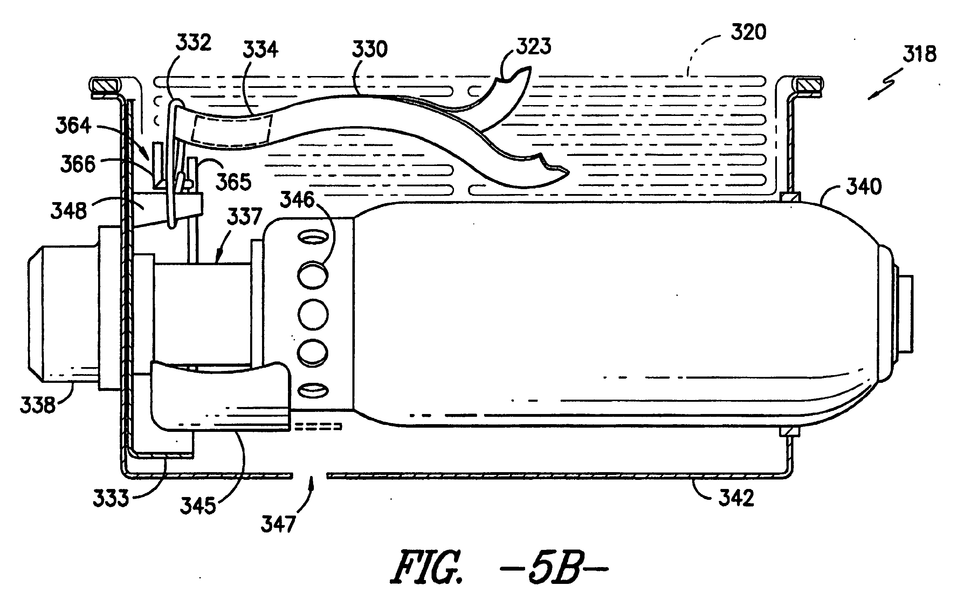

It is contemplated that the air bag cushion 20 has a first expanded profile which is obtained upon full extension of internal tethering elements 30 and at least a second expanded profile which is characterized by less depth than the first expanded profile. As best illustrated through simultaneous reference to FIGS. 2A and 2B, it is contemplated that one or more tethering elements 30 in the form of straps extending from locations at the interior of the air bag cushion 20 are utilized to control the inflated profile of the air bag cushion 20. The tethering elements 30 are normally held in fixed relation between connection points 29 at the interior of the cushion and a releasable restraint assembly 36 in the vicinity of a gas generating inflator 40. This releasable attachment may be effected by use of an integral or supplemental sliding loop structure 25 although it is contemplated that any number of other arrangements may likewise be utilized.

As shown in FIG. 2A under normal operating conditions, the tethering elements 30 restrain the profile of the expanding air bag cushion 20 to a first diminished depth. By way of example only, and not limitation, it is contemplated that such a restrained profile may be of particular use in the protection of smaller stature occupants and/or occupants seated in close proximity to the instrument panel 16. As shown in FIG. 2B, in instances where a larger profile is desired, the tethering elements 30 may be released from the restraint assembly 36 thereby yielding a permissible expanded geometry of expanded depth. In the event that the tethering elements 30 are released from the restraint assembly, it is contemplated that some degree of restraint may nonetheless be maintained by a length extending tether extension 23 such as a strap or the like operatively connected between the tethering elements and a secondary attachment location 27 which may be either on the surface of the air bag cushion or at an external location. By way of example only, and not limitation, it is contemplated that such an expanded depth may be particularly useful in the protection of larger stature occupants and/or in the protection of occupants seated a substantial distance away from the instrument panel 16.

As will be appreciated, upon the release of the tethering elements 30 from the restraint assembly 36, the volume of the air bag is increased. According to a potentially preferred practice, the air bag assembly 18 incorporates a selectively activatable variable inflation device which causes more or less inflation gas to be delivered to the air bag cushion depending upon the desired inflation characteristics. That is, the variable inflation device will deliver a greater quantity of inflation gas to the air bag cushion 20 in instances where a deep profile such as is illustrated in FIG. 2B is desired. Conversely, in instances where a more shallow inflated profile is desired such as illustrated in FIG. 2A, a smaller quantity of inflation gas is released into the air bag cushion 20.

According to a first exemplary practice, the variable inflation device incorporates a sliding vent blocking element which may be moved from a first position to a second position so as to either open or close a vent opening within the air bag assembly 18 thereby adjusting the volume of inflation gas passing from the inflator 40 into the air bag cushion 20. This opening or closing may be either partial or complete. By way of example only, and not limitation, one such variable inflation device is illustrated and described in U.S. Patent 6,123,358 to Ryan et al. the contents of which are incorporated by reference as if fully set forth herein. It is contemplated that the action of the vent blocking element will simultaneously increase the volume of the inflation gas entering the air bag cushion and disengage the tether elements 30 from the restraint assembly 36 so as to extend the operative length of the tether element such that an enhanced volume of inflation gas is selectively delivered to the air bag cushion 20 in conjunction with the operative extension of the tether elements 30.

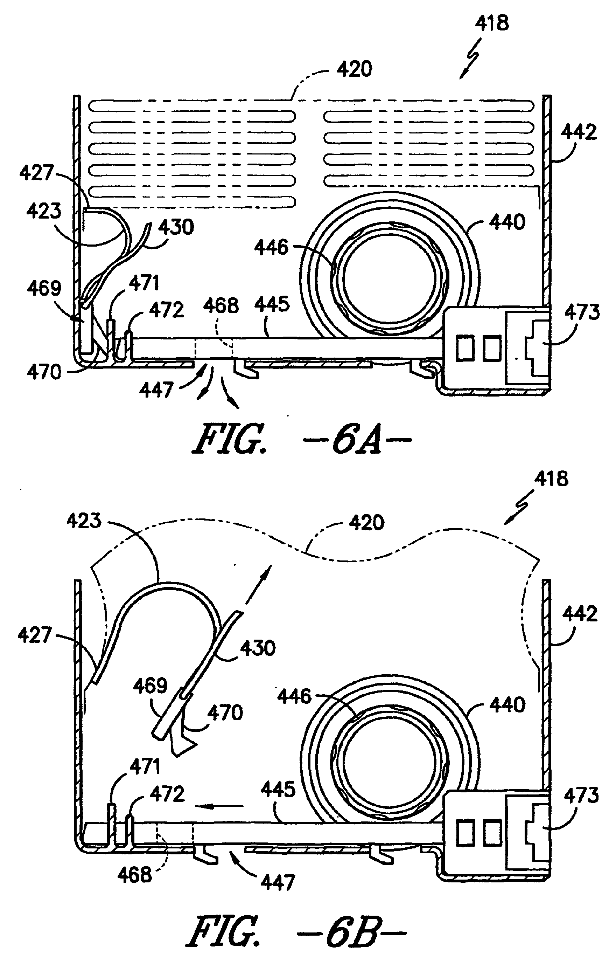

In FIGS. 3A and 3B there is illustrated a first arrangement for a cooperative tether extension assembly and variable inflation device wherein elements corresponding to those previously described are designated by like reference numerals in a 100 series. As illustrated, in this arrangement a tethering element 130 is passed through the interior of a loop element 132 of a generally pliable material such as fabric or the like of high tensile strength. The configuration of the loop element 132 and the tethering element 130 is thereafter maintained by attaching surfaces of the folded tethering element 130 to one another by stitching 134 or other attachment techniques such as adhesives and cooperating hook and loop elements as will be well known to those of skill in the art at a location remote from the loop element 132. While only a single tethering element 130 is illustrated, it is to be appreciated that multiple tethering elements may be incorporated if desired. A portion of the tethering element 130 extending away from the loop element 132 forms a length extending tether extension 123 which may be anchored in fixed or releasable relation to an anchor point (not shown) such as a stitched attachment to the interior or exterior surface of the air bag cushion . This length extending tether extension 123 acts as a mooring line to provide a secondary tethering restraint when the loop element 132 is released in the manner as will now be described.

As illustrated, the cooperative assembly includes an end cap 133 which preferably has a configuration generally corresponding to the cross-sectional geometry of an inflator housing 142 supporting the gas generating inflator 140 (FIG. 3B). The end cap 133 preferably includes an aperture 135 extending therethrough. The aperture 135 is sized to accept a squib-containing head portion 136 of a dynamic variable inflation device 137. A head cap 138 covers the head portion 136 following assembly. As shown, the variable inflation device 137 includes a slideable vent blocking plate 145 which is normally disposed out of alignment with gas emitting openings 146 within the inflator 140.

In instances where a lower volume of inflation gas is desired within the air bag cushion 120, the vent blocking plate remains out of alignment with the gas emitting openings 146 and a substantially unrestricted gas transmission path is thereby present between the gas emitting openings 146 and an aligned housing opening 147 thereby permitting a portion of the inflation gas to pass outwardly from the housing 142 rather than entering the air bag cushion 120. As shown in dotted lines, upon activation of the variable inflation device 137 the vent blocking plate 145 is moved over the gas emitting openings 146. In this covering position, the vent blocking plate 145 at least partially blocks the gas travel path between the gas emitting openings 146 and the housing opening 147 thereby causing an increased volume of inflation gas to be directed into the air bag cushion 120.

Preferably, the movement of the vent blocking plate 145 may also be used to release the tethering element 130 from fixed attachment within the housing 142 thereby permitting the air bag cushion 120 to assume an expanded inflated configuration as illustrated in FIG. 2B. In the embodiment illustrated in FIGS. 3A and 3B, the end cap 133 includes one or more extended pin elements 148 which project outwardly in the direction of movement of the vent blocking plate 145 (i.e. towards the gas emitting openings 146). During assembly, the loop element 132 attached to the tethering element 130 is passed over the pin elements 148 and held in place by an opposing wall 149 of the vent blocking plate 145. As best seen in FIG. 3A, the wall 149 of the vent blocking plate preferably includes notched channels 150 for acceptance of cooperating pin elements 148 on either side of the end plate aperture 135. Thus, a loop element 132 attached to a corresponding tethering element 130 may be passed over one or both pin elements 148 and thereafter be held in place between the end cap 133 and the opposing wall 149 of the vent blocking plate 145.

In operation, when the variable inflation device 137 is activated, the vent blocking plate 145 moves away from the end cap 133 and towards the gas emitting openings 146. This action also causes the wall 149 of the vent blocking plate to move away from the end cap 133 thereby permitting the loop element 32 and attached tethering element 130 to slide over and away from the pin elements 148 as outward tension is applied. This sliding removal may be facilitated by the lower edge of the pin elements 148 being angled upwardly as shown. In some instances, the sliding removal may be facilitated still further by use of leaf spring elements 152 which include notched channels to engage the underside of the pin elements 148 forward of the loop elements 132. The leaf spring elements 152 are arranged to normally apply a biasing force in the direction of movement of the vent blocking plate 145. Thus, by placing the loop element 132 between the leaf spring elements 152 and the wall 149 of the vent blocking plate 145, the leaf spring elements 152 will serve to push the loop elements 132 away from the pin elements 148 once the vent blocking plate 145 is moved away from the pin elements 148.

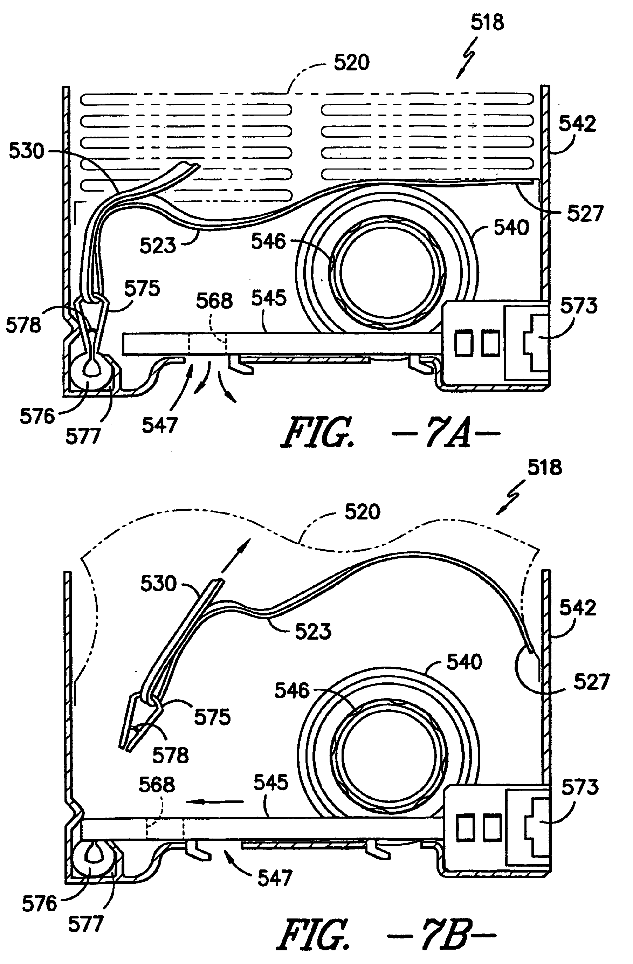

In FIGS. 4A and 4B, there is illustrated another tether release assembly in cooperative arrangement with a dynamic variable inflation device. Elements corresponding to those previously illustrated and described are designated by corresponding reference numerals in a 200 series. As shown in FIG. 4A, in this embodiment, the tethering element 230 is preferably passed in loop forming fashion through a clip element 256. The tethering element 230 is held in fixed relation to the clip element by stitching 234 or other suitable attachment systems as will be known to those of skill in the art. As shown, the clip element 256 is of a split construction including a pair of flexible distending legs 257 with outwardly projecting hooks on the legs 257. As illustrated, the legs 257 are separated from one another by a channel 258 opening into a wider circumference base portion 259. A portion of the tethering element 230 extending away from the clip element 256 forms a length extending tether extension 223 which may be anchored in fixed or releasable relation to an anchor point (not shown) such as a stitched attachment to an internal or external surface of the air bag cushion. In operation, this length extending tether extension 123 acts as a mooring line to provide a secondary tethering restraint when the loop element clip element 256 is released in the manner as will now be described.

The material forming the clip element 256 is preferably a plastic material having sufficient rigidity to retain its overall shape while nonetheless permitting the legs 257 to bend inwardly and outwardly to some degree. The clip element 256 is dimensioned such that the legs 257 may pass in substantially free sliding relation through the interior of a box channel element 260 projecting outwardly from the end cap 233. The box channel element 260 preferably includes an acceptance opening 261 for introduction of a spreading pin 262 which is carried on the variable inflation device 237 and moves in conjunction with the vent blocking plate 245. Upon assembly, the clip element 256 is passed into the box channel element 260 such that the base portion 259 is substantially in alignment with the acceptance opening 261 of the box channel element. The spreading pin 262 is thereafter inserted through the acceptance opening 261 and into the base portion 259 of the clip element 256. The dimensions of the spreading pin 262 are preferably such that the legs 257 are caused to spread apart so as to hook below the lower edges of the box channel element. If desired, the end of the spreading pin 262 may be tapered thereby facilitating smooth insertion.

In operation, upon activation of the variable inflation device and corresponding movement of the vent blocking plate 245 away from the end cap 233, the spreading pin 262 is withdrawn from engagement with the clip element 256 thereby permitting the legs 257 to pull inwardly and disengage from hooked relation beneath the box channel element 260. The tethering element 230 can thereby be pulled away from the stationary box channel element 260 as the air bag cushion 220 undergoes increased expansion.

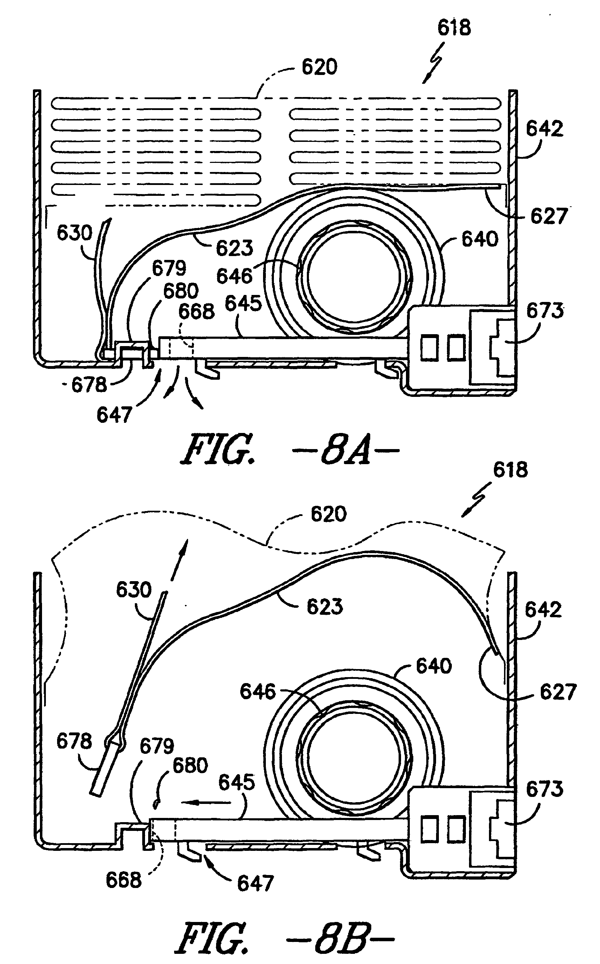

Another assembly for the retention and release of an air bag tethering element in conjunction with variable inflation control is illustrated in FIGS. 5A and 5B wherein elements corresponding to those previously illustrated and described are designated by reference numerals corresponding to those previously used in a 300 series. As shown in FIGS. 5A and 5B, the air bag assembly includes a tethering element 330 in adjoined relation to a loop element 332 as in the embodiments of FIGS. 3A and 3B. The variable inflation device 337 carries an upwardly extending forked extension 364 including a first upright bar 365 which is carried on the variable inflation device 337 and which moves in conjunction with the vent blocking plate 345. The forked extension 364 further includes a second upright bar 366 located forward of the first upright bar 365 (i.e. further away from the gas emitting openings 346) and a cross bar 367 connecting the first and second upright bars 365, 366.

As illustrated, the orientation of the forked extension 364 is preferably such that upon assembly the first and second upright bars are disposed between outboard pin elements 348 such as described in relation to the embodiments in FIGS. 3A and 3B. Due to the pliable nature of the material forming, the loop element 332, the loop element 332 may be passed in a generally sine wave configuration around the exterior of the outboard pin elements 348 and over the cross bar 367 between the first and second upright bars 365, 366 in the manner illustrated in FIG. 5B. Thus, the loop element 332 is secured against slippage away the outboard pin elements 348 prior to activation of the variable inflation device 337.

Upon activation of the variable inflation device 337, both the vent blocking plate 345 as well as the forked extension 364 are moved away from the end cap 333 and the stationary pin elements 348. During this movement, the second upright bar 366 pushes the loop element 332 over the ends of the pin elements 348. Once the pin elements 348 have been cleared, the loop element is no longer restrained by either the pin elements 348 or by the forked extension 364. Thus, the loop element 332 and the attached tethering element 330 are thereafter free to move away from the inflator 340 as the air bag cushion 320 expands outwardly.

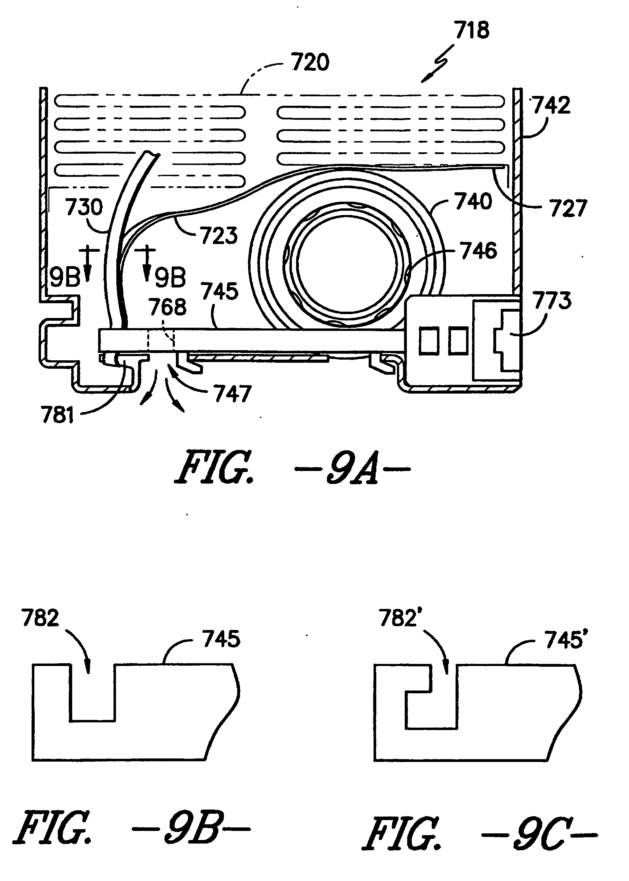

In addition to assemblies which utilize vent blocking plates which slide in axial relation to the inflator, it is likewise contemplated that release assemblies may incorporate attachment assemblies and cooperating vent blocking elements which move in substantially transverse relation to the inflator within a housing. A cut-away end view of an assembly incorporating a vent blocking element which is movable at substantially right angles to an elongate gas generating inflator is illustrated in FIGS. 6A and 6B wherein elements corresponding to those previously illustrated and described are designated by like reference characters in a 400 series.

As shown in FIG. 6A, the air bag assembly 418 includes an elongate gas generating inflator 440 similar to those illustrated in previous embodiments arranged within a housing 442. Extending across the housing at generally right angles to the inflator 440 is a vent blocking plate 445. The vent blocking plate 445 includes one or more localized vent openings 468 which are normally disposed in alignment with corresponding vent openings 447 within the housing 442. A tethering element 430 is attached to a locking tab element 469 secured in fixed opposing relation to a distal end of the vent blocking plate 445. As illustrated, the locking tab element 469 preferably includes an outwardly projecting hooked prong 470 which is engageable through an opening in a mating stationary clip element 471. If desired, a guide channel element 472 may be located adjacent to the mating clip element 471 to facilitate the travel of vent blocking plate 445 towards the hooked prong 470 in the manner to be described.

In operation when enhanced volume is not required, the vent blocking plate 445 remains in a substantially stationary position such that a portion of the inflation gas emitted by the inflator 440 is expelled outwardly through the aligned vent openings 447, 468. In the event that the crash severity and/or the size or position of the occupant to be protected indicates that an enhanced inflation profile is desirable, then a pressure generating squib 473 which may also be referred to as an initiator, may be activated thereby causing a pressure wave to move against the proximal end of the vent blocking plate 445 and pushing the vent blocking plate 445 away from the squib 473 and towards the opposing side wall of the housing 442. Upon movement of the vent blocking plate 445, the vent opening 468 within the vent blocking plate 445 moves out of alignment with the vent opening 447 in the housing as shown in FIG. 6B. Thus, the gas transmission path out of the housing is closed thereby forcing a greater quantity of inflation gas into the air bag cushion 420. In addition, the forward movement of the vent blocking plate 445 causes compression of the hooked prong 470 towards the body of the locking tab element 469 thereby causing the hooked prong 470 to disengage from the mating clip element 471. It is contemplated that this disengagement may be effected by either pushing the hooked prong 470 back through the mating clip element or by simply sheering the mating clip element off such that the locking tab element 469 is thereafter free to move away from the housing as illustrated in FIG. 6B. A degree of tethering restraint is preferably nonetheless maintained by length extending tether extension 423 which may be anchored in fixed or releasable relation to an anchor point such as a stitched attachment point 427 at an internal or external surface of the air bag cushion 420.

As shown, the distal end of the vent blocking plate 445 may have an angle substantially complementary with the angle of the hooked prong 470. Such mating angles may promote efficient contacting relation between the hooked prong 470 and the moving vent blocking plate 445. While a single hooked prong 470 is illustrated, it is to be understood that the locking tab element 469 may incorporate a number of prongs along its length so as to facilitate additional stability if desired.

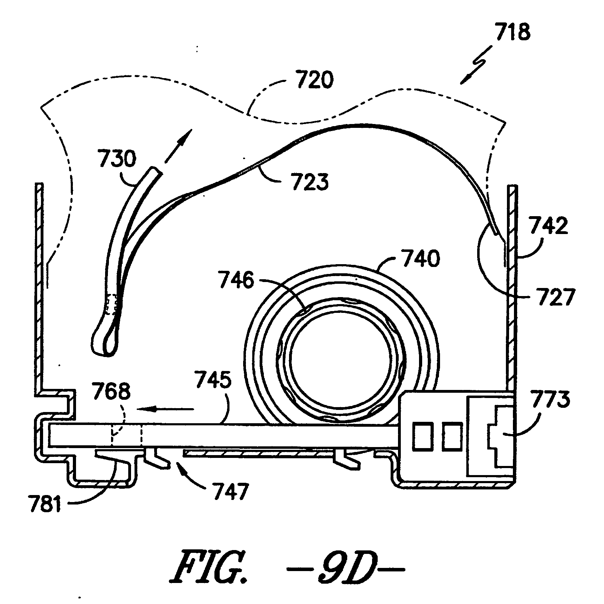

In FIGS. 7A and 7B, a cut-away end view similar to FIGS. 6A and 6B is provided illustrating another tether release assembly for use in conjunction with a variable inflation device within an air bag housing. In this embodiment like elements to those previously described are designated by like reference numerals in a 500 series. As shown, in this embodiment the tethering element 530 is attached to an elongate ring structure 575 which in turn is attached in frangible relation to a stationary base anchor element 576 held within a confinement chamber 577 along one side of the housing 542. The tethering element 530 is thus normally held in locked relation by the elongate ring structure 575 and cooperating base anchor element 576 as shown in FIG. 7A.

In instances when an enhanced expanded air bag profile is desired, the pressure generating squib or initiator 573 is fired thereby forcing the distal end of the vent blocking plate 545 forward and causing the elongate ring 575 to sheer away from the locked base anchor element 576. As shown, this sheering operation releases the tethering element 530 thereby allowing movement away from the stationary base anchor element 576 and the housing 542. A degree of tethering restraint is preferably nonetheless maintained by length extending tether extension 523 which may be anchored in fixed or releasable relation to an anchor point such as a stitched attachment point 527 to an internal or external surface of the air bag cushion 520.

As shown, the elongate ring 575 may include an internal bridging element 578 to prevent detachment from the tether element 530. During the sheering operation the vent openings 568 within the vent blocking plate 545 are moved out of alignment with the vent openings 547 within the housing thereby causing a greater percentage of inflation gas to be directed into the air bag cushion 520 in the manner as previously described in relation to other embodiments.

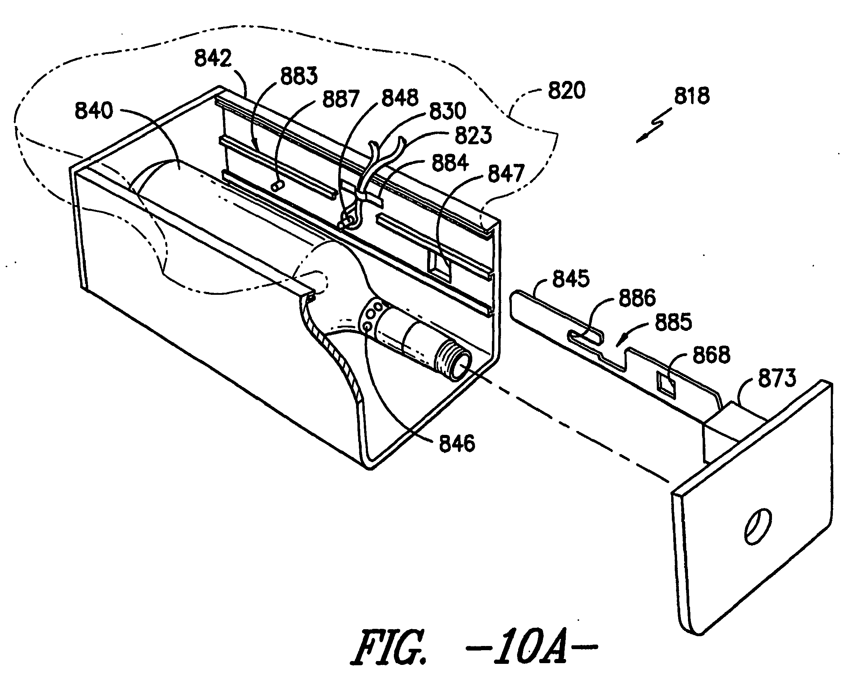

In FIGS. 8A and 8B there is illustrated in cut-away end view yet another arrangement for selective retention of an air bag tethering element. In this embodiment, elements corresponding to those previously illustrated and described are designated by like reference numerals in a 600 series. As shown, the air bag assembly 618 includes a tethering element 630 which is attached to a pin element 678. The pin element 678 extends through a stationary mating sleeve 679. One or more frangible sheer tabs 680 extend between the pin element 678 and the sleeve 679. As shown, the orientation of the pin element 678 within the sleeve 679 is in generally opposing relation to the distal end of the vent blocking plate 645. Thus, upon movement of the vent blocking plate 645 by the pressure generating squib or initiator 673, the pin element 678 is pushed out of the sleeve 679 as the sheer tabs 680 are broken off. Concurrently, the vent openings 647 and 668 become misaligned thereby increasing the percentage of inflation gas which may enter the inflatable cushion 620 (FIG. 8B). Following disengagement from the sleeve 679 the pin element 678 and attached tether element 630 are thereafter free to move away from the stationary sleeve 679 and the housing 642 in conjunction with the inflation of the air bag cushion 620. A degree of tethering restraint is preferably nonetheless maintained by length extending tether extension 623 which may be anchored in fixed or releasable relation to an anchor point such as a stitched attachment point 627 to an internal or external surface of the air bag cushion 620.

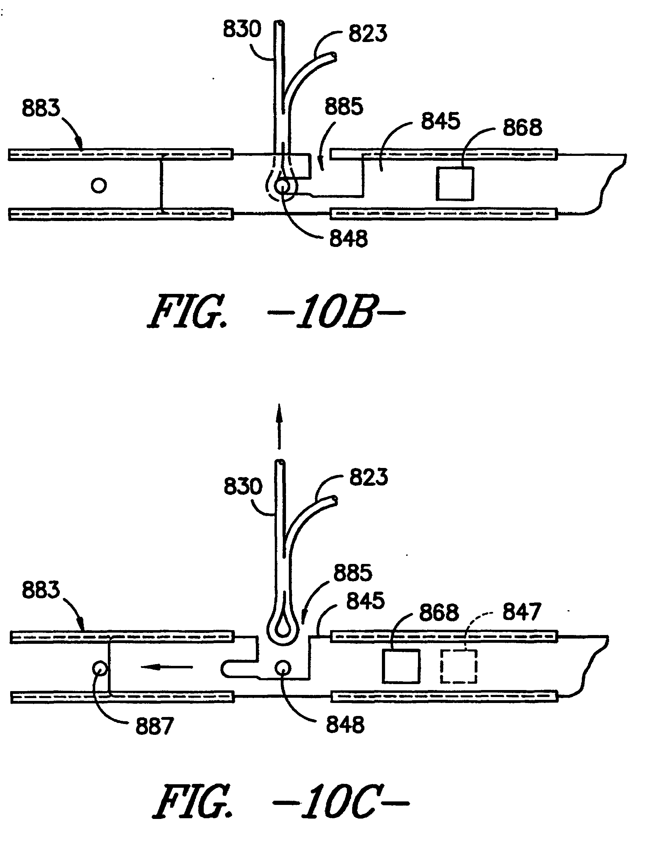

In FIGS. 9A-9D there is illustrated yet another arrangement for the selective retention and release of an air bag tethering element. In this embodiment, elements corresponding to those previously illustrated and described are designated by like reference numerals in a 700 series. In this arrangement, the air bag assembly 718 incorporates a vent blocking plate 745 including a hook-forming distal end which moves in substantially transverse relation to the inflator 740. The tether element 730 is formed into a loop at one end and passed over a fixed anchoring hitch element 781 projecting in the direction of travel of vent blocking plate 745. As best seen in FIG. 9B, the vent blocking plate 745 includes a generally "C" shaped hook 782 at the distal end. As illustrated, the hook 782 holds the tether element 730 on the hitch element 781 until it is moved away by firing the squib or initiator 773. In this orientation, the tethering element 730 is prevented from moving away from its anchored position thereby constricting the available inflation diameter of the overlying air bag cushion 720 to which the tethering element 730 is operatively connected. While a substantially straight sided "C" shaped hook 782 may be utilized to hold the tethering element 730 in place, it is also contemplated that other geometries such as a reverse "L" opening 782' as shown in FIG. 9C may likewise be utilized to further enhance ability of the vent blocking plate 745' to hold the tether in place prior to activation.

As best seen in FIG. 9D, when the vent blocking plate is advanced, the tethering element 730 is pushed off of the end of the anchoring hitch element 781 and is thereafter free to move out of the gap within the hook 782, 782' and away from the housing 742 as the air bag cushion 720 expands. A degree of tethering restraint is preferably nonetheless maintained by length extending tether extension 723 which may be anchored in fixed or releasable relation to an anchor point such as a stitched attachment point 727 to an internal or external surface of the air bag cushion 720. Concurrently with the release of the tethering element, the vent opening 747 within the housing 742 is at least partially closed off thereby directing an enhanced percentage of inflation gas into the air bag cushion 720.

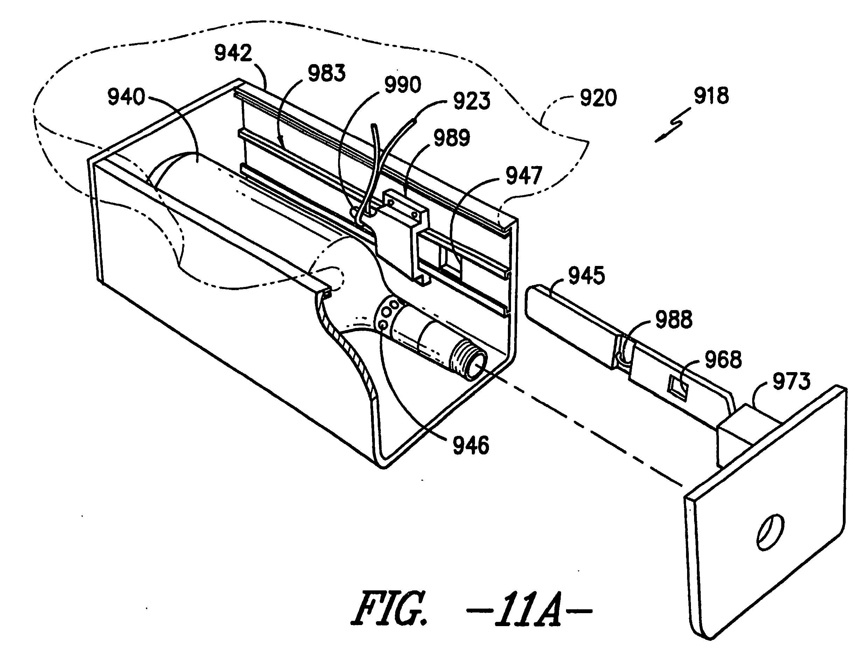

In FIGS. 10A, 10B, and 10C, there is illustrated yet another arrangement for the selective retention and extension inducing release of an air bag tethering element. In this embodiment, elements corresponding to those previously illustrated and described are designated by corresponding reference numerals within an 800 series. As illustrated, in this embodiment, the vent blocking plate 845 is arranged along one side wall of the housing 842 within a support channel 883 as shown. Such a side arrangement is illustrated in U.S. Patent 6,161,866 to Ryan et al. the teachings of which are incorporated by reference as if fully set forth herein. As shown, in this embodiment a stationary pin element 848 extends away from the side wall of the housing 842 within the boundaries of the support channel 883. A looped end of a tethering element 830 is disposed over the pin element 848. A portion of the tethering element 830 extending away from the pin element 848 forms a length extending tether extension 823 which may be anchored in fixed or releasable relation to an anchor point (not shown) such as a stitched attachment to the interior or exterior surface of the air bag cushion.

The pin element 848 may be angled upwardly if desired so as to facilitate the sliding disengagement of the tethering element 830 upon application of a tensioning force. A break-away attachment strip 884 may be used to hold the tethering element 830 in a substantially planar relation to the side wall if desired. The side wall of the housing 842 also includes an opening 847 within the boundaries of the support channel 883. The vent blocking plate 845 includes a key slot 885 extending from the upper edge into the interior of the vent blocking plate 845. As illustrated, the key slot 885 includes a nose projection 886 projecting in the direction of sliding movement by the vent blocking plate 845. The vent blocking plate 845 also includes a vent opening 868 as shown.

As best seen through simultaneous reference to FIGS. 10A-10C, upon assembly, the pin element 848 is disposed within the nose portion 886 of the key slot 885 with the portion of the tethering element extending away from the pin element 848 being held behind the vent blocking plate 845 between the side wall and the vent blocking plate (FIG. 10B). In this normal configuration, the vent openings 847 and 868 within the side wall and vent blocking plate are substantially aligned such that a portion of inflation gas emitted from the gas emitting openings 846 is carried outwardly from the housing 842. In operation, the arrangement as illustrated in FIG. 10B is maintained for deployment of air bag cushions under circumstances where a shallow restrained profile is desired. In that arrangement, the tethering element 830 is secured against movement away from the pin element 848 by the overlying portion of the vent blocking plate 845.

In the event that a release of the tethering element 830 is desired, an initiator or squib 873 is fired thereby projecting the vent blocking plate 845 in sliding relation through the support channel 883 until contacting a stop pin 887 (FIG. 10C). As shown, the forward movement of the vent blocking plate 845 causes the nose portion 886 to be displaced relative to the stationary pin element 848 thereby bringing the pin element 848 into alignment with an open portion of the key slot 885. In this arrangement, the tethering element 830 is no longer held beneath the sliding vent blocking element and is thereby free to slide off of the pin element 848 as shown. In addition to the release of the tethering element 830, the sliding movement of the vent blocking element 845 also results in the substantial misalignment of the vent openings 847, 868 thereby closing off the gas transmission path through the housing 842 and causing a greater percentage of inflation gas to be directed into the air bag cushion.

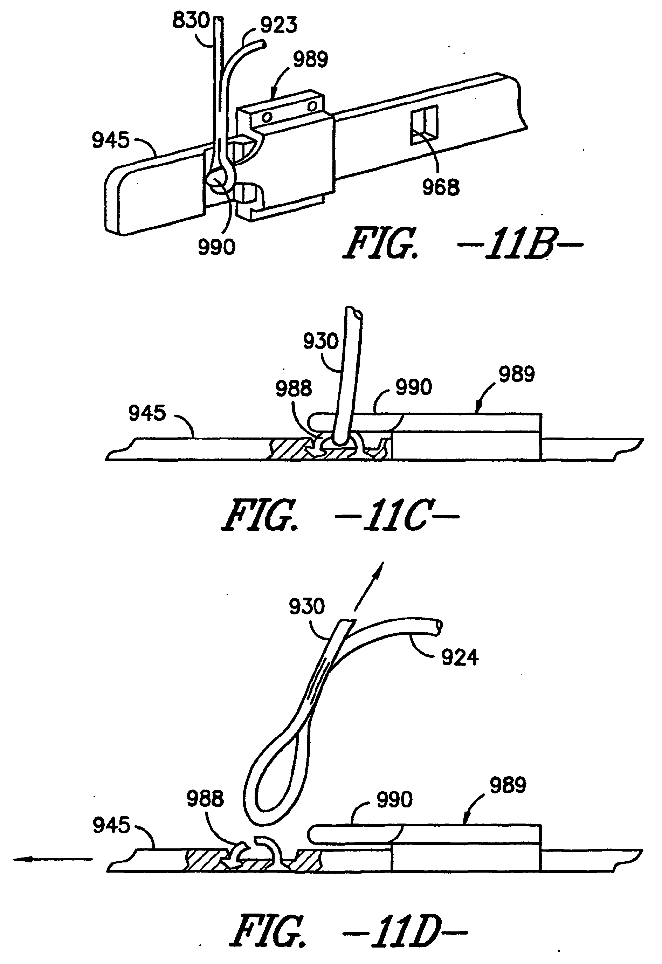

In FIGS. 11A-11D, there is illustrated still another arrangement for the selective retention and release of a tethering element. In this embodiment, elements corresponding to those previously illustrated and described are designated by like reference numerals in a 900 series. As shown in FIG. 11A, in this assembly a sliding vent blocking plate 945 is arranged in sliding relation within a support channel 983 extending along a side wall of the housing 942. The vent blocking plate 945 may be moved within the support channel by activation of a squib 973 or other initiator. As best seen in FIG. 11C and 11D, a looped end of a tethering element 930 is attached to the vent blocking plate 945 by a breakable attachment element 988 such as a piece of plastic fixed in a loop-forming fashion to the surface of the vent blocking plate 945. The tethering element 930 is further held in place by a stationary clip element 989 which is mounted to the side wall of the housing. As shown, the stationary clip element 989 includes a narrow finger projection 990 which projects away from the body of the clip element in the direction of movement of the vent blocking plate 945. As shown, the vent blocking plate also includes a vent opening 968 which may be aligned with a corresponding vent opening 947 within the housing 942.

Upon assembly, the finger projection 990 is arranged to extend through the looped end of the tethering element 930 in overlying relation to the breakable attachment element 988 (FIG. 11C). In this configuration, the finger projection 990 supports the tethering element 930 against outward movement. In this restrained arrangement, the vent openings 968 and 947 are preferably substantially aligned as shown in FIG. 11B thereby permitting a portion of the inflation gas emitted by the inflator 940 to be discharged through the housing 942 without entering an overlying air bag cushion.

In the event that release of the tethering element 930 is desired, the squib 973 is fired thereby projecting the vent blocking plate 945 in sliding relation in the direction of the stationary finger projection 990. Upon the occurrence of such movement, the breakable attachment element 988 pulls the tethering element 930 out of engagement with the finger projection 990 as shown in FIG. 11D. However, once disengagement from the finger projection is effected, the strength of the breakable attachment element 988 is insufficient to retain the tethering element 930 in place and the tethering element 930 is thereby released from its previous attachment at the vent blocking plate 945. As illustrated, the movement of the vent blocking plate also results in the misalignment of the vent openings within the vent blocking plate and housing thereby causing a greater percentage of inflation gas to be directed into the overlying air bag cushion as increased expansion takes place. According to the illustrated arrangement, a portion of the tethering element 930 extending away from the loop forms a length extending tether extension 923 which may be anchored in fixed or releasable relation to an anchor point (not shown) such as a stitched attachment to the interior or exterior surface of the air bag cushion so as to nonetheless maintain a degree of tethering restraint.

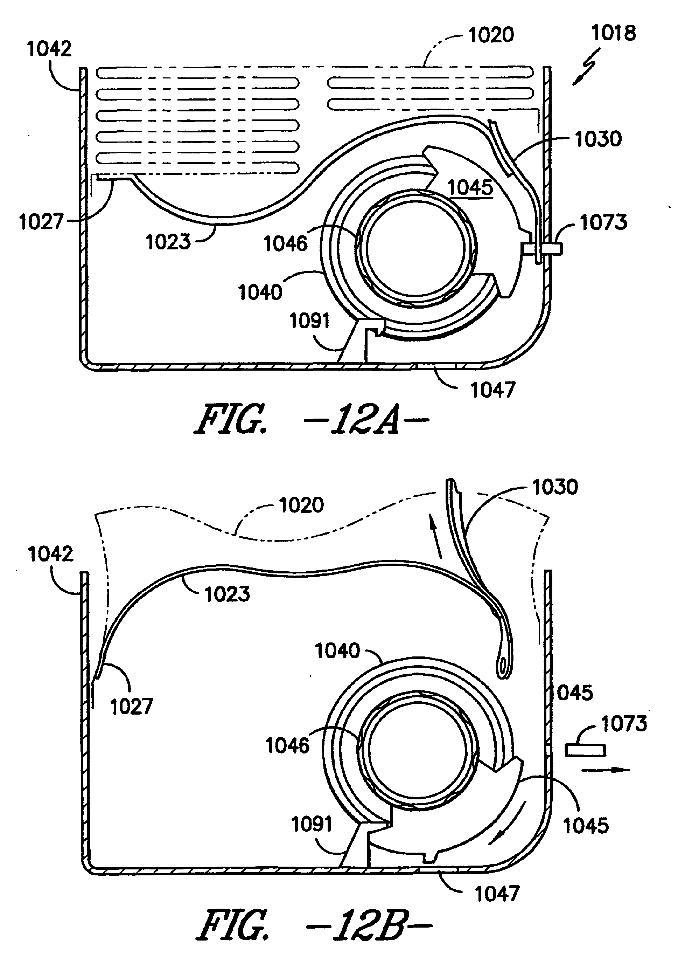

In FIGS. 12A and 12B, there is illustrated still another arrangement for the selective retention of a tethering element. In this embodiment, components corresponding to those previously illustrated and described are designated by like reference numerals in a 1000 series. In this embodiment the air bag assembly 1018 (shown in cut-away end view) includes an elongate inflator 1040 such as illustrated in FIGS. 10A and 11A arranged along the length of a housing 1042. A rotatable vent blocking element 1045 having a generally cupped configuration is arranged over the neck portion of the inflator in substantially opposing relation to the circumferentially arranged gas emitting openings 1046. As will be appreciated, the inflator is of a configuration substantially as illustrated in FIGS. 10A and 11A with the view of FIG. 12A being inwardly at the narrow end of the inflator 1040.

It is contemplated that the vent blocking element 1045 may swing freely about the neck of the inflator. As shown, the tethering element 1030 is held in looped relation over a displaceable squib element 1073 which may be fired on demand. As shown, the squib element 1073 is preferably disposed slightly below the centerline of the radius of rotation for the vent blocking element 1045. Accordingly, upon activation of the squib 1073 a pressure force directed against the vent blocking element 1045 is translated into a rotational movement which brings the vent blocking element 1045 downward into the position illustrated in FIG. 12B. As illustrated, the force of activation simultaneously causes the squib 1073 to be displaced away from the vent blocking element 1045 thereby providing clearance to permit the rotation. At the same time, the tethering element 1030 is released from engagement with the squib 1073. Once the vent blocking element 1045 is rotated into a blocking relation with respect to the vent opening 1047 within the housing 1042, this position may thereafter be maintained by engagement with a latch element 1091 which cooperatively hooks over the leading edge of the vent blocking element 1045. Following disengagement from the squib 1073, the tether element 1030 is thereafter free to move in conjunction with the inflation of the air bag cushion 1020. A degree of tethering restraint is preferably nonetheless maintained by length extending tether extension 1023 which may be anchored in fixed or releasable relation to an anchor point such as a stitched attachment point 1027 to an internal or external surface of the air bag cushion 1020.

It is to be understood that while the present invention has been illustrated and described in relation to potentially preferred embodiments, constructions and procedures, that such embodiments, constructions and procedures are illustrative only and the present invention is in no event to be limited thereto. Rather it is contemplated that modifications and variations embodying the principles of the present invention will no doubt occur to those skilled in the art. It is therefore contemplated and intended that the present invention shall extend to all such modifications and variations as may incorporate the broad aspects of the present invention as defined by the claims.

## Claims

1. An air bag assembly (118) for cushioning restraint of an occupant in a vehicle during an impact event, the air bag assembly comprising:
a housing (142) having an interior and an exterior and including at least one vent opening (147) disposed between the interior and the exterior; an inflator (140) disposed within the housing (142), the inflator (140) including at least one gas outlet opening (146) and being activatable to discharge inflation gas upon the occurrence of predetermined vehicle conditions;
an inflatable air bag cushion (120) in fluid communication with the inflator (140) such that upon discharge of inflation gas from the inflator (140) the air bag cushion is inflated to a deployed state;
at least one profile restraining tethering element (130) operatively connected to the air bag cushion (120), the tethering element further being releasably anchored at a first anchor location within the housing and fixedly anchored at least at a second anchor location; and a displaceable vent blocking element (145) selectively moveable in response to predetermined occupant conditions to establish a gas blocking barrier between said at least one gas outlet opening (146) in the inflator (140) and said at least one vent opening (147) in the housing (142), the vent blocking element (145) comprising a leading edge projecting in the direction of movement along the inflator and a wall portion (149) normally disposed adjacent to an end wall (133)of the housing, the wall portion (149) of the displaceable vent blocking element (145) including at least one slotted opening (150) therein for acceptance of a stationary pin element 148) extending inwardly into the housing, the stationary pin element being adapted to extend through a loop element (132) operatively connected to said at least one profile restraining tethering element (130) such that the loop element (132) is normally held over the stationary pin element (148) between the wall portion (149) of the displaceable vent blocking element (145) and said end wall (133) of the housing (142) such that upon movement of the displaceable vent blocking element (145) away from said end wall (133) the stationary pin element (148) is disengaged from said at least one slotted opening (150) within the wall portion (149) of the displaceable vent blocking element (145) whereby the loop element (132) may be pulled away from the stationary pin element (148) as tension is applied to said at least one profile restraining tethering element (130).

2. The invention as recited in claim 1, wherein a leaf spring element (152) is disposed at the stationary pin element (148) for disposition between the loop element (132) and the end wall (133) of the housing (142) such that upon movement of the displaceable vent blocking element (145) away from said end wall (133), the leaf spring element (145) pushes the loop element (132) away from the end wall (133).

3. An air bag assembly (218) for cushioning restraint of an occupant in a vehicle during an impact event, the air bag assembly (218) comprising:
a housing (242) having an interior and an exterior and including at least one vent opening (247) disposed between the interior and the exterior,
an inflator (240) disposed within the housing, the inflator (240) including at least one gas outlet opening (246) and being activatable to discharge inflation gas upon the occurrence of predetermined vehicle conditions;
an inflatable air bag cushion (220) in fluid communication with the inflator (240) such that upon discharge of inflation gas from the inflator (240) the air bag cushion is inflated to a deployed state;
at least one profile restraining tethering element (230) operatively connected to the air bag cushion, the tethering element (230) further being releasably anchored at a first anchor location within the housing and fixedly anchored at a second anchor location; and a displaceable vent blocking element (245) selectively moveable in response to predetermined occupant conditions to establish a gas blocking barrier between said at least one gas outlet opening (246) in the inflator (240) and said at least one vent opening (247) in the housing (242), wherein the vent blocking element (245) is operatively connected to a pin element (262) including a leg portion projecting towards an end wall (233) of the housing (242), a stationary box channel element (260) being affixed at the end wall (233) of the housing (242) and extending inwardly into the housing (242) in the direction of movement of the displaceable vent blocking element (245), an expansible clip element (256) being operatively connected to said at least one profile restraining tethering element (230) and adapted to be inserted into the stationary box channel element (260) such that upon insertion of the expansible clip element (256) into the stationary box channel element (260) a pin accepting opening (259) within the expansible clip element (260) is disposed in alignment with an aperture (261) within the stationary box channel element (260) in substantial alignment with the leg portion of the pin element (262) projecting towards the end wall (233) of the housing (242), the leg portion of the pin element (262) being normally disposed through the aligned aperture (261) within the stationary box channel element and the pin accepting opening (259) within the expansible clip element (256) such that a pair of hooked legs (257) extending away from the pin accepting opening (259) are normally spread in locking relation beneath the stationary box channel element (260) such that the expansible clip element (256) is normally held within the stationary box channel element (260) and such that upon movement of the displaceable vent blocking element (245) away from said end wall (233), the leg portion of the pin element (262)is disengaged from the expansible clip element (256) and the expansible clip element (256) may be pulled away from the stationary box channel element (260) as tension is applied to said at least one profile restraining tethering element (230).

4. An air bag assembly (318) for cushioning restraint of an occupant in a vehicle during an impact event, the air bag assembly (318) comprising:
a housing (342) having an interior and an exterior and including at least one vent opening (347) disposed between the interior and the exterior an inflator (340) disposed within the housing (342), the inflator (340) including at least one gas outlet opening (346) and being activatable to discharge inflation gas upon the occurrence of predetermined vehicle conditions;
an inflatable air bag cushion (320) in fluid communication with the inflator (340) such that upon discharge of inflation gas from the inflator (340) the air bag cushion (320) is inflated to a deployed state;
at least one profile restraining tethering element (330) operatively connected to the air bag cushion (320). the tethering element further being releasably anchored at a first anchor location within the housing (342) and fixedly anchored at a second anchor location; and a displaceable vent blocking element (345) selectively moveable in response to predetermined occupant conditions to establish a gas blocking barrier between said at least one gas outlet opening (346) in the inflator (340) and said at least one vent opening (347) in the housing (342), the vent blocking element (345) being operatively connected to an upwardly extending forked extension (346) including a first upright bar (365), a cross bar (367) projecting away from the first upright bar (365) towards an end wall (333) of the housing (342) and away from the direction of movement of the displaceable vent blocking element (345) and a second upright bar (366) extending away from the cross bar (367) at a location closer to the end wall (333) than the first upright bar (365), the end wall including a pair of stationary pin elements (348) extending inwardly away from the end wall (333) in outboard relation to the forked extension (364), the stationary pin elements being adapted to extend through a loop element (332) operatively connected to said at least one profile restraining tethering element (330) such that the loop element (332) is normally held around the stationary pin elements (348) and over the cross bar (367) between the first upright bar (365) and the second upright bar (366) such that upon movement of the displaceable vent blocking element (345) away from said end wall (333) the second upright bar (366) pulls the loop element (332) away from the stationary pin elements (348).

5. An air bag assembly (118, 218, 318, 418, 518, 618, 718, 818, 918, 1018, 1218) for cushioning restraint of an occupant (14) in a vehicle (10) during an impact event, the air bag assembly (118, 218, 318, 418, 518, 618, 718, 818, 918, 1018, 1218) comprising:
a housing (142, 242, 342, 442, 542, 642, 742, 842, 942, 1042, 1142, 1242) having an interior and an exterior and including at least one vent opening (147, 247, 347, 447, 547, 647, 747, 847, 947, 1047, 1147, 1247) disposed between the interior and the exterior; an inflator (140, 240, 340, 440, 540, 640, 740, 840, 940, 1040, 1140, 1240) disposed within the housing (142, 242, 342, 442, 542, 642, 742, 842, 942, 1042, 1142, 1242), the inflator (140, 240, 340, 440, 540, 640, 740, 840, 940, 1040, 1140, 1240) including at least one gas outlet opening (146, 246, 346, 446, 546, 646, 746, 846, 946, 1046, 1146, 1246), and being activatable to discharge inflation gas upon the occurrence of predetermined vehicle conditions; an inflatable air bag cushion in fluid communication with the inflator (140, 240, 340, 440, 540, 640, 740, 840, 940, 1040, 1140, 1240) such that upon discharge of inflation gas from the inflator (140, 240, 340, 440, 540, 640, 740, 840, 940, 1040, 1140, 1240) the air bag cushion is inflated to a deployed state;
at least one profile restraining tethering element (130,230, 330, 430, 530, 630, 730, 830, 930, 1030, 1130, 1230) operatively connected to the air bag cushion, the tethering element further being releasably anchored at a first anchor location within the housing (142, 242, 342, 442, 542, 642, 742, 842, 942, 1042, 1142, 1242) and
fixedly anchored at least at a second anchor location; and a displaceable vent blocking element (145, 245, 345, 445, 545, 645, 745, 845, 945, 1045, 1145, 1245) selectively moveable in response to predetermined occupant conditions to establish a gas blocking barrier between said at least one gas outlet opening (146, 246, 346, 446, 546, 646, 746, 846, 946, 1046, 1146, 1246) in the inflator (140, 240, 340, 440, 540, 640, 740, 840, 940, 1040, 1140, 1240) and said at least one vent opening (147, 247, 347, 447, 547, 647, 747, 847, 947, 1047, 1147, 1247) in the housing (142, 242, 342, 442, 542, 642, 742, 842, 942, 1042, 1 142, 1242), the vent blocking element (145, 245, 345, 445, 545, 645, 745, 845, 945, 1045, 1145, 1245) being adapted to translate at least one of a dynamic pushing or pulling displacement force to said at least one profile restraining tethering element (130, 230, 330, 430, 530, 630, 730, 830, 930, 1030, 1130, 1230) upon movement of the vent blocking element (145, 245, 345, 445, 545, 645, 745, 845, 945, 1045, 1145, 1245) such that said at least one profile restraining tethering element (130, 230, 330, 430, 530, 630, 730, 830, 930, 1030, 1130, 1230) is forcibly displaced from said first anchor location by said dynamic pushing or pulling force substantially in conjunction with the establishment of a gas blocking barrier between said at least one gas outlet opening (146, 246, 346, 446, 546, 646, 746, 846, 946, 1046, 1146, 1246) in the inflator (140, 240, 340, 440, 540, 640, 740, 840, 940, 1040, 1140, 1240) and said at least one vent opening (147, 247, 347, 447, 547, 647, 747, 847, 947, 1047, 1147, 1247) in the housing (142, 242, 342, 442, 542, 642, 742, 842, 942, 1042, 1142, 1242) such that an increased volume of inflation gas is directed into the air bag cushion when said at least one profile restraining tethering element (130, 230, 330, 430, 530, 630, 730, 830, 930, 1030, 1130, 1230) is displaced from said first anchor location and such that said at least one profile restraining tethering element (130, 230, 330, 430, 530, 630, 730, 830, 930, 1030, 1130, 1230) is extended to an increased operative length extending away from said second anchor location **characterised in that** the displaceable vent blocking element (445, 545, 645, 745) is moveable in a substantially transverse relation to the inflator (440, 540, 640, 740).

6. The invention according to claim 5, wherein said at least one profile restraining tethering element (430) is affixed to a locking tab element (469) held in place by a stationary clip element (471) and wherein the displaceable vent blocking element (445) is adapted to impact the locking tab element (469) upon being moved by a pressure applying driving element such that the displaceable vent blocking element (445) pushes the locking tab element (469) out of engagement with the stationary clip element (471).

7. The invention according to claim 5, wherein said at least one profile restraining tethering element (530) is affixed to a break-away ring (575) frangibly attached to a base element (576) secured in place within the housing (542) and wherein the displaceable vent blocking element (545) is configured to impact the break-away ring (575) upon being moved by a driving element such that the break-away ring (575) is broken away from the base element (576) and said at least one profile restraining tethering element (530) is correspondingly extended to an enhanced operative length.

8. The invention according claim 7, wherein the break-away ring (575) includes an internal bridge member (578) to prevent disengagement of the breakaway ring from said at least one profile restraining tethering element (530).

9. The invention according to claim 5, wherein said at least one profile restraining tethering element (630) is affixed to a pin element (678) secured within a mating sleeve (679), the pin element (678) being held in place within the mating sleeve (679) by at least one breakable shear tab (680) such that a distal end of the pin element (678) projects outwardly from the mating sleeve (679) and towards the displaceable vent blocking element (645) and wherein the displaceable vent blocking element (645) is adapted to impact the distal end of the pin element (678) upon being moved by a driving element such that upon impact the displaceable vent blocking element (678) breaks the shear tab (680) and the pin element (678) is released from the mating sleeve (679).

10. The invention according to claim 5, wherein said at least one profile restraining tethering element (730) is affixed over an anchoring hitch element (781) and wherein the displaceable vent blocking element (745) includes a bordered key opening (782, 782') normally disposed over the anchoring hitch (781) such that said at least one profile restraining tethering element (730) extends away from the anchoring hitch (781) and through the key opening (782, 782') and such that upon movement of the displaceable vent blocking element (745) by a driving element, the vent blocking element (745) pushes said at least one profile restraining tethering element (730) away from said anchoring hitch (781) and said at least one profile restraining tethering element (730) is pulled through the key opening (782, 782') as tension is applied during inflation of the air bag cushion (720).

11. An air bag assembly (818, 918) for cushioning restraint of
an occupant in a vehicle during an impact event, the air bag assembly comprising:
a housing (842, 942) having an interior and an exterior and including at least one vent opening (847.947) disposed between the interior and the exterior;
an inflator (840, 940) disposed within the housing (842, 942), the inflator (840, 940) including at least one gas outlet opening (846, 946) and being activatable to discharge inflation gas upon the occurrence of predetermined vehicle conditions;
an inflatable air bag cushion (820, 920) in fluid communication with the inflator (840, 940) such that upon discharge of inflation gas from the inflator (840, 940) the air bag cushion is inflated to a deployed state;
at least one profile restraining tethering element (830, 930) operatively connected to the air bag cushion (820, 920), the tethering element further being releasably anchored at a first anchor location within the housing (842, 942); and a displaceable vent blocking element (845, 945) selectively moveable in response to predetermined occupant conditions to establish a gas blocking barrier between said at least one gas outlet opening (846, 946) in the inflator (840,940) and said at least one vent opening (847,947) in the housing (842, 942), wherein the displaceable vent blocking element (845, 945) is moveable in sliding relation along a side wall of the housing (842, 942) adjacent to said inflator (840, 940), wherein the displaceable vent blocking element (845) comprises an elongate plate structure carried within a support channel (883) extending along said side wall, the displaceable vent blocking element (845) including a proximal end operatively connected to a force generating driving element activatable to move the displaceable vent blocking element (845) within the support channel, the displaceable vent blocking element (845) further including a distal end projecting in the direction of movement and lateral edges extending between the proximal and distal ends, wherein a key slot (885) extends inwardly from a first one of the lateral edges, said key slot (885) including a nose portion (886) projecting towards the distal end of the displaceable vent blocking element, and wherein a tether retaining pin element (848) projects away from said side wall and into the interior of the housing (842), the tether retaining pin element (848) normally extending through the nose portion (886) of said key slot (885), said at least one profile restraining tethering element (830) including a loop element normally disposed in sliding relation over the tether retaining pin element (848) such that a portion of said at least one profile restraining tethering element (830) normally extends between said side wall and a portion of the displaceable vent blocking element (845) adjacent to the nose portion (886) of said key slot (885), the key slot (885) further including an open portion extending away from said first one of the lateral edges such that upon activated movement of the displaceable vent blocking element in the direction of the distal end, the open portion of the key slot is shifted over the tether retaining pin element (848), whereby said at least one profile restraining tethering element (830) is released from constriction between said side wall and the displaceable vent blocking element (845) such that said at least one profile restraining tethering element is slideable away from the tether retaining pin element (848) upon application of a tensioning force.

12. The invention as recited in claim 11, wherein the tether retaining pin element (848) is angled upwardly.

13. The invention according to claim 11, wherein the displaceable vent blocking element (945) comprises an elongate plate structure carried within a support channel (983) extending along said side wall, the displaceable vent blocking element (945) including a proximal end operatively connected to a force generating driving element (973) activatable to move the displaceable vent blocking element (945) within the support channel, the displaceable vent blocking element (945) further including a distal end projecting in the direction of movement, wherein a stationary clip element (989) is affixed to said side wall in overlying relation to the displaceable vent blocking element (945), the stationary clip element (989) including a finger projection (990) projecting in the direction of movement of the displaceable vent blocking element (945), said at least one profile restraining tethering element including a loop element normally disposed in sliding relation over the finger projection, said at least one profile restraining tethering element further being connected by a frangible attachment element (988) to a portion of the displaceable vent blocking element (945) such that upon activated movement of the displaceable vent blocking element (945) in the direction of the distal end, the frangible attachment element (988) carries said at least one profile restraining tethering element (930) away from the finger projection (990) and is thereafter held in place by the frangible attachment element (988) until released by the application of a tensioning force.

14. An air bag assembly (1018) for cushioning restraint of an occupant in a vehicle during an impact event, the air bag assembly comprising:
a housing (1042) having an interior and an exterior and including at least one vent opening (1047) disposed between the interior and the exterior;
an inflator (1040) disposed within the housing (1042), the inflator (1040) including at least one gas outlet opening (1046) and being activatable to discharge inflation gas upon the occurrence of predetermined vehicle conditions;
an inflatable air bag cushion (1020) in fluid communication with the inflator (1040) such that upon discharge of inflation gas from the inflator (1040) the air bag cushion is inflated to a deployed state;
at least one profile restraining tethering element (1030) operatively connected to the air bag cushion (1020), the tethering element (1030) further being releasably
anchored at a first anchor location within the housing (1042); and a displaceable vent blocking element (1045) selectively moveable in response to predetermined occupant conditions to establish a gas blocking barrier between said at least one gas outlet opening (1046) in the inflator (1040) and said at least one vent opening (1047) in the housing, wherein the displaceable vent blocking element (1045) is moveable in rotating relation at least partially around said inflator (1040) in overlying relation to said at least one gas outlet opening (1046) and wherein the tethering element (1030) is concurrently released from said first anchor location within the housing (1042) and extended to an increased operative length.

## Patentansprüche

1. Airbag-Anordnung (118) zum Abfedern der Rückhaltung eines Insassen in einem Fahrzeug während eines Aufpralls, wobei die Airbag-Anordnung umfasst:
ein Gehäuse (142), das einen Innenraum und Außenraum aufweist und zumindest eine Entlüftungsöffnung (147) enthält, die zwischen dem Innenraum und dem Außenraum angeordnet ist; einen Gasgenerator (140), der innerhalb des Gehäuses (142) angeordnet ist, wobei der Gasgenerator (140) zumindest eine Gasauslassöffnung (146) aufweist und betätigt werden kann, um beim Eintreten vorbestimmter Fahrzeugzustände Gas zum Aufblasen auszustoßen;
ein aufblasbares Airbag-Kissen (120) in Fluidverbindung mit dem Gasgenerator (140), so dass bei Ausstoß eines Gases zum Aufblasen vom Gasgenerator (140) das Airbag-Kissen in einen entfalteten Zustand aufgeblasen wird;
zumindest ein das Profil beschränkendes Halteseilelement (130), das mit dem Airbag-Kissen (120) wirksam verbunden ist, wobei das Halteseilelement ferner an einer ersten Verankerungsstelle innerhalb des Gehäuses lösbar verankert und zumindest an einer zweiten Verankerungsstelle fest verankert ist; und ein verschiebbares, die Entlüftung blockierendes Element (145), das als Antwort auf vorbestimmte Zustände der Insassen selektiv bewegbar ist, um eine gasblockierende Sperre zwischen der zumindest einen Gasauslassöffnung (146) im Gasgenerator (140) und der zumindest einen Entlüftungsöffnung (147) im Gehäuse (142) einzurichten, wobei das die Entlüftung blockierende Element (145) eine in der Richtung einer Bewegung entlang dem Gasgenerator vorragende Vorderkante und
einen Wandabschnitt (149) aufweist, der normalerweise einer Endwand (133) des Gehäuses benachbart angeordnet ist, wobei der Wandabschnitt (149) des verschiebbaren, die Entlüftung blockierenden Elements (145) darin zumindest eine geschlitzte Öffnung (150) zur Aufnahme eines stationären Stiftelements (148) aufweist, das sich einwärts in das Gehäuse erstreckt, wobei das stationäre Stiftelement dafür angepasst ist, sich durch ein Schleifenelement (132) zu erstrecken, das wirksam mit dem zumindest einen, ein Profil beschränkenden Halteseilelement (130) verbunden ist, so dass das Schleifenelement (132) normalerweise über das stationäre Stiftelement (148) zwischen dem Wandabschnitt (149) des verschiebbaren, die Entlüftung blockierenden Elements (145) und der Endwand (133) des Gehäuses (142) gehalten wird, so dass bei einer Bewegung des verschiebbaren, die Entlüftung blockierenden Elements (145) weg von der Endwand (133) das stationäre Stiftelement (148) aus der zumindest einen geschlitzten Öffnung (150) innerhalb des Wandabschnitts (149) des verschiebbaren, die Entlüftung blockierenden Elements (145) ausgerückt wird, wodurch das Schleifenelement (132) vom stationären Stiftelement (148) weggezogen werden kann, wenn eine Spannung an das zumindest eine, das Profil beschränkende Halteseilelement (130) angelegt wird.

2. Erfindung nach Anspruch 1,
wobei am stationären Stiftelement (148) für eine Anordnung zwischen dem Schleifenelement (132) und der Endwand (133) des Gehäuses (142) ein Blattfederelement (152) angeordnet ist, so dass bei einer Bewegung des verschiebbaren, die Entlüftung blockierenden Elements (145) weg von der Endwand (133) das Blattfederelement (152) das Schleifenelement (132) von der Endwand (133) wegschiebt.

3. Airbag-Anordnung (218) zum Abfedern der Rückhaltung eines Insassen in einem Fahrzeug während eines Aufpralls, wobei die Airbag-Anordnung (218) umfasst:
ein Gehäuse (242), das einen Innenraum und Außenraum aufweist und zumindest eine Entlüftungsöffnung (247) enthält, die zwischen dem Innenraum und dem Außenraum angeordnet ist;
einen Gasgenerator (240), der im Gehäuse angeordnet ist, wobei der Gasgenerator (240) zumindest eine Gasauslassöffnung (246) enthält und betätigt werden kann, um beim Eintreten vorbestimmter Fahrzeugzustände Gas zum Aufblasen auszustoßen;
ein aufblasbares Airbag-Kissen (220) in Fluidverbindung mit dem Gasgenerator (240), so dass bei Ausstoß eines Gases zum Aufblasen aus dem Gasgenerator (240) das Airbag-Kissen in einen entfalteten Zustand aufgeblasen wird;
zumindest ein, ein Profil beschränkendes Halteseilelement (230), das mit dem Airbag-Kissen wirksam verbunden ist, wobei das Halteseilelement (230) ferner an einer ersten Verankerungsstelle innerhalb des Gehäuses lösbar verankert und an einer zweiten Verankerungsstelle fest verankert ist;
und ein verschiebbares, die Entlüftung blockierendes Element (245), das als Antwort auf vorbestimmte Zustände von Insassen selektiv bewegbar ist, um eine gasblockierende Sperre zwischen der zumindest einen Gasauslassöffnung (246) im Gasgenerator (240) und der zumindest einen Entlüftungsöffnung (247) im Gehäuse (242) einzurichten, wobei das die Entlüftung blockierende Element (245) mit einem Stiftelement (262) wirksam verbunden ist, das einen in Richtung auf eine Endwand (233) des Gehäuses (242) vorragenden Beinabschnitt aufweist, ein stationäres Kastenkanalelement (260) an der Endwand (233) des Gehäuses (242) befestigt ist und sich einwärts in das Gehäuse (242) in der Richtung einer Bewegung des verschiebbaren, die Entlüftung blockierenden Elements (245) erstreckt, ein ausdehnbares Clipelement (256), das mit dem zumindest einen, das Profil beschränkenden Halteseilelement (230) wirksam verbunden und dafür eingerichtet ist, in das stationäre Kastenkanalelement (260) eingesetzt zu werden, so dass bei Einsatz des ausdehnbaren Clipelements (256) in das stationäre Kastenkanalelement (260) eine einen Stift aufnehmende Öffnung (259) innerhalb des ausdehnbaren Clipelements (260) in Ausrichtung mit einer Durchbrechung (261) innerhalb des stationären Kastenkanalelements (260) im Wesentlichen ausgerichtet mit dem in Richtung auf Endwand (233) des Gehäuses (242) vorstehenden Beinabschnitt des Stiftelements (262) angeordnet wird, wobei der Beinabschnitt des Stiftelements (262) normalerweise durch die ausgerichtete Durchbrechung (261) innerhalb des stationären Kastenkanalelements und der den Stift aufnehmenden Öffnung (259) innerhalb des ausdehnbaren Clipelements (256) angeordnet wird, so dass ein Paar sich von der den Stift aufnehmenden Öffnung (259) weg erstreckende hakenförmige Beine (257) unter dem stationären Kastenkanalelement (260) normalerweise arretierend gespreizt sind, so dass das ausdehnbare Clipelement (256) normalerweise innerhalb des stationären Kastenkanalelements (260) gehalten wird und bei einer Bewegung des verschiebbaren, die Entlüftung blockierenden Elements (245) weg von der Endwand (230) der Beinabschnitt des Stiftelements (262) aus dem ausdehnbaren Clipelement (256) ausgerückt wird und das ausdehnbare Clipelement (256) vom stationären Kastenkanalelement (260) weggezogen werden kann, wenn eine Spannung an das zumindest eine, das Profil beschränkende Halteseilelement (230) angelegt wird.

4. Airbag-Anordnung (318) zum Abfedern der Rückhaltung eines Insassen in einem Fahrzeug während eines Aufpralls, wobei die Airbag-Anordnung (318) umfasst:
ein Gehäuse (342), das einen Innenraum und Außenraum aufweist und zumindest eine Entlüftungsöffnung (347) enthält, die zwischen dem Innenraum und dem Außenraum angeordnet ist;
einen Gasgenerator (340), der im Gehäuse (342) angeordnet ist, wobei der Gasgenerator (340) zumindest eine Gasauslassöffnung (346) enthält und betätigt werden kann, um beim Eintreten vorbestimmter Fahrzeugzustände Gas zum Aufblasen auszustoßen;
ein aufblasbares Airbag-Kissen (320) in Fluidverbindung mit dem Gasgenerator (340), so dass bei Ausstoß eines Gases zum Aufblasen aus dem Gasgenerator (340) das Airbag-Kissen (320) in einen entfalteten Zustand aufgeblasen wird;
zumindest ein, ein Profil beschränkendes Halteseilelement (330), das mit dem Airbag-Kissen (320) wirksam verbunden ist, wobei das Halteseilelement ferner an einer ersten Verankerungsstelle innerhalb des Gehäuses (342) lösbar verankert und an einer zweiten Verankerungsstelle fest verankert ist; und ein verschiebbares, die Entlüftung blockierendes Element (345), das als Antwort auf vorbestimmte Zustände von Insassen selektiv bewegbar ist, um eine gasblockierende Sperre zwischen der zumindest einen Gasauslassöffnung (346) im Gasgenerator (340) und der zumindest einen Entlüftungsöffnung (347) im Gehäuse (342) einzurichten, wobei das die Entlüftung blockierende Element (345) mit einer aufwärts verlaufenden gegabelten Verlängerung (364) wirksam verbunden ist, die einen ersten aufrechten Stab (365), einen Querstab (367), der vom ersten aufrechten Stab (365) weg in Richtung auf eine Endwand (333) des Gehäuses (342) und aus der Bewegungsrichtung des verschiebbaren, die Entlüftung blockierenden Elements (345) weg vorragt, und einen zweiten aufrechten Stab (366) umfasst, der sich an einer zur Endwand (333) näher gelegenen Stelle als der erste aufrechte Stab (365) vom Querstab (367) weg erstreckt, wobei die Endwand ein Paar stationäre Stiftelemente (348) enthält, die sich von der Endwand (333) weg außerhalb der gegabelten Verlängerung (364) einwärts erstrecken, wobei die stationären Stiftelemente dafür angepasst sind, dass sie sich durch ein Schleifenelement (332) erstrecken, das mit dem zumindest einen, das Profil beschränkenden Halteseilelement (330) wirksam verbunden ist, so dass das Schleifenelement (332) normalerweise um die stationären Stiftelemente (348) und über den Querstab (367) zwischen dem ersten aufrechten Stab (365) und dem zweiten aufrechten Stab (366) gehalten wird, so dass bei einer Bewegung des verschiebbaren, die Entlüftung blockierenden Elements (345) weg von der Endwand (333) der zweite aufrechte Stab (366) das Schleifenelement (332) von den stationären Stiftelementen (348) weg zieht.

5. Airbag-Anordnung (118, 218, 318, 418, 518, 618, 718, 818, 918, 1018, 1218), um die Rückhaltung eines Insassen (14) in einem Fahrzeug (10) während eines Aufpralls abzufedern, wobei die Airbag-Anordnung (118, 218, 318, 418, 518, 618, 718, 818, 918, 1018, 1218) umfasst:
ein Gehäuse (142, 242, 342, 442, 542, 642, 742, 842, 942, 1042, 1142, 1242), das einen Innenraum und einen Außenraum aufweist und zumindest eine Entlüftungsöffnung (147, 247, 347, 447, 547, 647, 747, 847, 947, 1047, 1147, 1247) enthält, die zwischen dem Innenraum und dem Außenraum angeordnet ist; einen Gasgenerator (140, 240, 340, 440, 540, 640, 740, 840, 940, 1040, 1140, 1240), der im Gehäuse (142, 242, 342, 442, 542, 642, 742, 842, 942, 1042, 1142, 1242) angeordnet ist, wobei der Gasgenerator (140, 240, 340, 440, 540, 640, 740, 840, 940, 1040, 1140, 1240) zumindest eine Gasauslassöffnung (146, 246, 346, 446, 546, 646, 746, 846, 946, 1046, 1146, 1246) enthält und betätigt werden kann,
um bei Eintritt vorbestimmter Fahrzeugzustände Gas zum Aufblasen auszustoßen; ein aufblasbares Airbag-Kissen in Fluidverbindung mit dem Gasgenerator (140, 240, 340, 440, 540, 640, 740, 840, 940, 1040, 1140, 1240), so dass bei Ausstoß eines Gases zum Aufblasen vom Gasgenerator (140, 240, 340, 440, 540, 640, 740, 840, 940, 1040, 1140, 1240) das Airbag-Kissen in einen entfalteten Zustand aufgeblasen wird;
zumindest ein ein Profil beschränkendes Halteseilelement (130, 230, 330, 430, 530, 630, 730, 830, 930, 1030, 1130, 1230), das mit dem Airbag-Kissen wirksam verbunden ist, wobei das Halteseilelement ferner an einer ersten Verankerungsstelle innerhalb des Gehäuses (142, 242, 342, 442, 542, 642, 742, 842, 942, 1042, 1142, 1242) lösbar verankert ist und mindestens an einer zweiten Verankerungsstelle fest verankert ist; und ein verschiebbares, die Entlüftung blockierendes Element (145, 246, 345, 445, 545, 645, 745, 845, 945, 1045, 1145, 1245), das als Antwort auf vorbestimmte Zustände von Insassen selektiv bewegbar ist, um eine gasblockierende Sperre zwischen der zumindest einen Gasauslassöffnung (146, 246, 346, 446, 546, 646, 746, 846, 946, 1046, 1146, 1246) im Gasgenerator (140, 240, 340, 440, 540, 640, 740, 840, 940, 1040, 1140, 1240) und der zumindest einen Entlüftungsöffnung (147, 247, 347, 447, 547, 647, 747, 847, 947, 1047, 1147, 1247) im Gehäuse (142, 242, 342, 442, 542, 642, 742, 842, 942, 1042, 1142, 1242) einzurichten, wobei das die Entlüftung blockierende Element (145, 246, 345, 445, 545, 645, 745, 845, 945, 1045, 1145, 1245) dafür eingerichtet ist, zumindest eine Kraft einer dynamischen ziehenden oder schiebenden Verrückungskraft auf das zumindest eine, das Profil beschränkende Halteseilelement (130, 230, 330, 430, 530, 630, 730, 830, 930, 1030, 1130, 1230) bei einer Bewegung des die Entlüftung blockierenden Elements (145, 246, 345, 445, 545, 645, 745, 845, 945, 1045, 1145, 1245) zu übertragen, so dass das zumindest eine, das Profil beschränkende Halteseilelement (130, 230, 330, 430, 530, 630, 730, 830, 930, 1030, 1130, 1230) durch die dynamische schiebende oder ziehende Kraft im Wesentlichen in Verbindung mit der Einrichtung einer gasblockierenden Sperre zwischen der zumindest einen Gasauslassöffnung (146, 246, 346, 446, 546, 646, 746, 846, 946, 1046, 1146, 1246) im Gasgenerator (140, 240, 340, 440, 540, 640, 740, 840, 940, 1040, 1140, 1240) und der zumindest einen Entlüftungsöffnung (147, 247, 347, 447, 547, 647, 747, 847, 947, 1047, 1147, 1247) im Gehäuse (142, 242, 342, 442, 542, 642, 742, 842, 942, 1042, 1142, 1242) aus der ersten Verankerungsstelle zwangsweise verschoben wird, so dass ein gesteigertes Volumen von Gas zum Aufblasen in das Airbag-Kissen geleitet wird, wenn das zumindest eine, das Profil beschränkende Halteseilelement (130, 230, 330, 430, 530, 630, 730, 830, 930, 1030, 1130, 1230) aus der ersten Verankerungsstelle verschoben wird, und das zumindest eine, das Profil beschränkende Halteseilelement (130, 230, 330, 430, 530, 630, 730, 830, 930, 1030, 1130, 1230) von der zweiten Verankerungsstelle weg verlaufend auf eine vergrößerte Wirklänge ausgedehnt wird,
**dadurch gekennzeichnet,**
**dass** das verschiebbare, die Entlüftung blockierende Element (445, 545, 645, 745) im Wesentlichen quer zum Gasgenerator (440 540, 640, 740) bewegbar ist.

6. Erfindung nach Anspruch 5,
wobei das zumindest eine, das Profil beschränkende Halteseilelement (430) an einem Arretierlappenelement (469) befestigt ist, das
durch ein stationäres Clipelement (471) an Ort und Stelle gehalten wird, und wobei das verschiebbare, die Entlüftung blockierende Element (445) dafür eingerichtet ist, auf das Arretierlappenelement (469) zu treffen, wenn es durch ein Druck anwendendes Antriebselement bewegt wird, so dass das verschiebbare, die Entlüftung blockierende Element (445) das Arretierlappenelement (469) aus einem Eingriff mit dem stationären Clipelement (471) schiebt.

7. Erfindung nach Anspruch 5,
wobei das zumindest eine, das Profil beschränkende Halteseilelement (530) an einem an einem innerhalb des Gehäuses (542) an Ort und Stelle gehaltenen Basiselement (576) zerbrechlich angebrachten Abrissring (575) befestigt ist und wobei das verschiebbare, die Entlüftung blockierende Element (545) so ausgebildet ist, dass es auf den Abrissring (575) trifft, wenn es durch ein Antriebselement bewegt wird, so dass der Abrissring (575) vom Basiselement (576) abgerissen und das zumindest eine, das Profil beschränkende Halteseilelement (530) entsprechend auf eine vergrößerte Wirklänge ausgedehnt wird.

8. Erfindung nach Anspruch 7,
wobei der Abrissring (575) ein internes Brückenbauteil (578) enthält, um ein Ausrücken des Abrissrings aus dem zumindest einen das Profil beschränkenden Halteseilelement (530) zu verhindern.

9. Erfindung nach Anspruch 5,
wobei das zumindest eine, das Profil beschränkende Halteseilelement (630) an einem Stiftelement (678) befestigt ist, das innerhalb einer zugehörigen Hülse (679) gesichert ist, wobei das Stiftelement (678) innerhalb der zugehörigen Hülse (679) durch zumindest einen brechbaren Scherlappen (680) an Ort und Stelle gehalten wird, so dass ein Distalende des Stiftelements (678) aus der zugehörigen Hülse (679) und in Richtung auf das verschiebbare, die Entlüftung blockierende Element (645) vorsteht, und wobei das verschiebbare, die Entlüftung blockierende Element (645) dafür angepasst ist, dass es auf das Distalende des Stiftelements (678) trifft, wenn es durch ein Antriebselement bewegt wird, so dass das verschiebbare, die Entlüftung blockierende Element (678) beim Auftreffen den Scherlappen (680) bricht und das Stiftelement (678) von der zugehörigen Hülse (679) gelöst wird.

10. Erfindung nach Anspruch 5,
wobei das zumindest eine, das Profil beschränkende Halteseilelement (730) über einem Verankerungshakenelement (781) befestigt ist und das verschiebbare, die Entlüftung blockierende Element (745) eine eingefasste Schlüsselöffnung (782, 782') aufweist, die normalerweise über dem Verankerungshaken (781) angeordnet ist, so dass das zumindest eine, das Profil beschränkende Halteseilelement (730) sich vom Verankerungshaken (781) weg und durch die Schlüsselöffnung (782, 782') erstreckt und bei einer Bewegung des verschiebbaren, die Entlüftung blockierenden Elements (745) durch ein Antriebselement das die Entlüftung blockierende Element (745) das zumindest eine, das Profil beschränkende Halteseilelement (730) vom Verankerungshaken (781) wegschiebt und das zumindest eine, das Profil beschränkende Halteseilelement (730) durch die Schlüsselöffnung (782, 782') gezogen wird, wenn während eines Aufblasens des Airbag-Kissens (720) eine Spannung angelegt wird.

11. Airbag-Anordnung (818, 918), um die Rückhaltung eines Insassen im Fahrzeug während eines Aufpralls abzufedern, wobei die Airbag-Anordnung umfasst:
ein Gehäuse (842, 942), das einen Innenraum und einen Außenraum aufweist und zumindest eine Entlüftungsöffnung (847, 947) enthält, die zwischen dem Innenraum und dem Außenraum angeordnet ist;
einen Gasgenerator (840, 940), der im Gehäuse (842, 942) angeordnet ist, wobei der Gasgenerator (840, 940) zumindest eine Gasauslassöffnung (846, 946) enthält und betätigt werden kann, um beim Eintreten vorbestimmter Fahrzeugzustände Gas zum Aufblasen auszustoßen;
ein aufblasbares Airbag-Kissen (820, 920) in Fluidverbindung mit dem Gasgenerator (840, 940), so dass bei Ausstoß eines Gases zum Aufblasen aus dem Gasgenerator (840, 940) das Airbag-Kissen in einen entfalteten Zustand aufgeblasen wird;
zumindest ein das Profil beschränkendes Halteseilelement (830, 930), das mit dem Airbag-Kissen (820, 920) wirksam verbunden ist, wobei das Halteseilelement ferner an einer ersten Verankerungsstelle innerhalb des Gehäuses (842, 942) lösbar verankert; und ein verschiebbares, die Entlüftung blockierendes Element (845, 945), das als Antwort auf vorbestimmte Zustände der Insassen selektiv bewegbar ist, um eine gasblockierende Sperre zwischen der zumindest einen Gasauslassöffnung (846, 946) im Gasgenerator (840, 940) und der zumindest einen Entlüftungsöffnung (847, 947) im Gehäuse (842, 942) einzurichten, wobei das verschiebbare, die Entlüftung blockierende Element (845, 945) entlang einer Seitenwand des Gehäuses (842, 942) dem Gasgenerator (840, 940) benachbart gleitend bewegbar ist, wobei das verschiebbare, die Entlüftung blockierende Element (845) eine langgestreckte Plattenstruktur aufweist, die innerhalb eines Abstützkanals (883) aufgenommen wird, der sich entlang der Seitenwand erstreckt, wobei das verschiebbare, die Entlüftung blockierende Element (845) ein Proximalende aufweist, das mit einem eine Kraft erzeugenden Antriebselement wirksam verbunden ist, das betätigt werden kann, um das verschiebbare, die Entlüftung blockierende Element (845) innerhalb des Abstützkanals zu bewegen, wobei das verschiebbare, die Entlüftung blockierende Element (845) ferner ein Distalende aufweist, das in der Richtung einer Bewegung vorragt, und Seitenränder, die sich zwischen dem Proximal- und Distalende erstrecken, wobei ein Schlüsselschlitz (885) von einem ersten der Seitenränder einwärts verläuft, wobei der Schlüsselschlitz (885) einen Nasenabschnitt (886) aufweist, der in Richtung auf das Distalende des verschiebbaren, die Entlüftung blockierenden Elements vorragt, und wobei ein das Halteseil zurückhaltendes Stiftelement (848) von der Seitenwand weg und in den Innenraum des Gehäuses (842) vorragt und das das Halteseil zurückhaltende Stiftelement (848) sich normalerweise durch den Nasenabschnitt (886) des Schlüsselschlitzes (885) erstreckt, wobei das zumindest eine, das Profil beschränkende Halteseilelement (830) ein Schleifenelement enthält, das normalerweise gleitend über dem das Halteseil zurückhaltenden Stiftelement (848) angeordnet ist, so dass ein Abschnitt des zumindest einen, das Profil beschränkenden Halteseilelements (830) sich normalerweise zwischen der Seitenwand und einem Abschnitt des verschiebbaren, die Entlüftung blockierenden Elements (845) dem Nasenabschnitt (886) des Schlüsselschlitzes (885) benachbart erstreckt, wobei der Schlüsselschlitz (885) ferner einen offenen Abschnitt enthält, der sich von dem ersten der Seitenränder weg erstreckt, so dass bei einer ausgelösten Bewegung des verschiebbaren, die Entlüftung blockierenden Elements in der Richtung des Distalendes der offene Abschnitt des Schlüsselschlitzes über das das Halteseil zurückhaltende Stiftelement (848) verschoben wird, wodurch das zumindest eine, das Profil beschränkende Halteseilelement (830) aus einer Verengung zwischen der Seitenwand und dem verschiebbaren, die Entlüftung blockierenden Element (845) gelöst wird, so dass das zumindest eine, das Profil beschränkende Halteseilelement bei Anwendung einer Zugkraft von dem das Halteseil zurückhaltenden Stiftelement (848) weg gleiten kann.

12. Erfindung nach Anspruch 11,
wobei das das Halteseil zurückhaltende Stiftelement (848) nach oben gewinkelt ist.

13. Erfindung nach Anspruch 11,
wobei das verschiebbare, die Entlüftung blockierende Element (945) eine langgestreckte Plattenstruktur aufweist, die innerhalb eines Abstützkanals (983) aufgenommen wird, der sich entlang der Seitenwand erstreckt, wobei das verschiebbare, die Entlüftung blockierende Element (945) ein Proximalende enthält, das mit einem eine Kraft erzeugenden Antriebselement (973) wirksam verbunden ist, das betätigt werden kann, um das verschiebbare, die Entlüftung blockierende Element (945) innerhalb des Abstützkanals zu bewegen, wobei das verschiebbare, die Entlüftung blockierende Element (945) ferner ein Distalende aufweist, das in der Bewegungsrichtung vorragt, wobei ein stationäres Clipelement (989) über dem verschiebbaren, die Entlüftung blockierenden Element (945) liegend an der Seitenwand befestigt ist und das stationäre Clipelement (989) einen Fingervorsprung (990) aufweist, der in der Richtung einer Bewegung des verschiebbaren, die Entlüftung blockierenden Elements (945) vorragt, wobei das zumindest eine, das Profil beschränkende Halteseilelement ein Schleifenelement aufweist, das normalerweise gleitend über dem Fingervorsprung angeordnet ist, und das zumindest eine, das Profil beschränkende Halteseilelement ferner durch ein zerbrechliches Befestigungselement (988) mit einem Abschnitt des verschiebbaren, die Entlüftung blockierenden Elements (945) verbunden ist, so dass bei einer ausgelösten Bewegung des verschiebbaren, die Entlüftung blockierenden Elements (945) in Richtung des Distalendes das zerbrechliche Befestigungselement (988) das zumindest eine, das Profil beschränkende Halteseilelement (930) vom Fingervorsprung (990) weg befördert und danach durch das zerbrechliche Befestigungselement (988) an Ort und Stelle gehalten wird, bis es durch die Anwendung einer Zugkraft gelöst wird.

14. Airbag-Anordnung (1018), um die Rückhaltung eines Insassen in einem Fahrzeug während eines Aufpralls abzufedern, wobei die Airbag-Anordnung umfasst:
ein Gehäuse (1042), das einen Innenraum und einen Außenraum aufweist und zumindest eine Entlüftungsöffnung (1047) enthält, die zwischen dem Innenraum und dem Außenraum angeordnet ist; einen Gasgenerator (1040), der im Gehäuse (1042) angeordnet ist,
wobei der Gasgenerator (1040) zumindest eine Gasauslassöffnung (1046) enthält und betätigt werden kann, um beim Eintreten vorbestimmter Fahrzeugzustände Gas zum Aufblasen auszustoßen;
ein aufblasbares Airbag-Kissen (1020) in Fluidverbindung mit dem Gasgenerator (1040), so dass bei Ausstoß eines Gases zum Aufblasen aus dem Gasgenerator (1040) das Airbag-Kissen in einen entfalteten Zustand aufgeblasen wird;
zumindest ein das Profil beschränkendes Halteseilelement (1030), das mit dem Airbag-Kissen (1020) wirksam verbunden ist, wobei das Halteseilelement (1030) ferner an einer ersten Verankerungsstelle innerhalb des Gehäuses (1042) lösbar verankert; und ein verschiebbares, die Entlüftung blockierendes Element (1045), das als Antwort auf vorbestimmte Zustände der Insassen selektiv bewegbar ist, um eine gasblockierende Sperre zwischen der zumindest einen Gasauslassöffnung (1046) im Gasgenerator (1040) und der zumindest einen Entlüftungsöffnung (1047) im Gehäuse einzurichten, wobei das verschiebbare, die Entlüftung blockierende Element (1045) über der zumindest einen Gasauslassöffnung (1046) liegend zumindest teilweise um den Gasgenerator (1040) drehend bewegbar ist und wobei das Halteseilelement (1030) gleichzeitig von der ersten Verankerungsstelle innerhalb des Gehäuses (1042) gelöst und auf eine vergrößerte Wirklänge ausgedehnt wird.

## Revendications

1. Ensemble formant coussin gonflable (118) pour retenir par amortissement l'occupant d'un véhicule en cas de choc, l'ensemble formant coussin gonflable comprenant :
un boîtier (142) comportant un intérieur et un extérieur et comprenant au moins un orifice de mise à l'air libre (147) disposé entre l'intérieur et l'extérieur ; un dispositif de gonflage (140) disposé à l'intérieur du boîtier (142), le dispositif de gonflage (140) comprenant au moins une ouverture de sortie de gaz (146) et pouvant être activé de manière à évacuer le gaz de gonflement au moment de la survenue de conditions relatives au véhicule prédéterminées ;
un coussin gonflable (120) en communication fluidique avec le dispositif de gonflage (140) de telle sorte que, au moment de l'évacuation du gaz de gonflement provenant du dispositif de gonflage (140), le coussin gonflable soit gonflé dans un état déployé ;
au moins un élément d'attache de retenue de profil (130) relié de manière opérationnelle au coussin gonflable (120), l'élément d'attache étant en outre ancré de manière détachable au niveau d'un premier emplacement d'ancrage à l'intérieur du boîtier et ancré de manière fixe au moins au niveau d'un second emplacement d'ancrage ; et un élément de blocage d'orifice de mise à l'air libre mobile (145) pouvant être déplacé de manière sélective en réponse à des conditions relatives à l'occupant prédéterminées afin d'établir une barrière de blocage de gaz entre ladite au moins ouverture de sortie de gaz (146) dans le dispositif de gonflage (140) et ledit au moins orifice de mise à l'air libre (147) dans le logement (142), l'élément de blocage d'orifice de mise à l'air libre (145) comprenant un bord principal qui fait saillie dans le sens de déplacement le long du dispositif de gonflage et une partie formant paroi (149) normalement disposée de manière adjacente à une paroi d'extrémité (133) du boîtier, la partie formant paroi (149) de l'élément de blocage d'orifice de mise à l'air libre mobile (145) comprenant au moins une ouverture en fente (150) destinée à accepter un élément formant patte stationnaire (148) qui s'étend vers l'intérieur dans le boîtier, l'élément formant patte stationnaire étant adapté pour s'étendre à travers un élément formant boucle (132) relié de manière opérationnelle audit au moins un élément d'attache de retenue de profil (130) de telle sorte que l'élément formant boucle (132) soit normalement maintenu sur l'élément formant patte stationnaire (148) entre la partie formant paroi (149) de l'élément de blocage d'orifice de mise à l'air libre mobile (145) et ladite paroi d'extrémité (133) du boîtier (142) de telle sorte que, au moment du déplacement de l'élément de blocage d'orifice de mise à l'air libre mobile (145) à distance de ladite paroi d'extrémité (133), l'élément formant patte stationnaire (148) soit mis hors de prise de ladite au moins ouverture en fente (150) à l'intérieur de la partie formant paroi (149) de l'élément de blocage d'orifice de mise à l'air libre mobile (145), moyennant quoi l'élément formant boucle (132) peut être tiré à distance de l'élément formant patte stationnaire (148) lorsqu'une tension est appliquée sur ledit au moins un élément d'attache de retenue de profil (130).

2. Invention selon la revendication 1, dans laquelle un élément formant ressort à lame (152) est disposé au niveau de l'élément formant patte stationnaire (148) afin d'être disposé entre l'élément formant boucle (132) et la paroi d'extrémité (133) du boîtier (142) de telle sorte que, au moment du déplacement de l'élément de blocage d'orifice de mise à l'air libre mobile (145) à distance de ladite paroi d'extrémité (133), l'élément formant ressort à lame (145) pousse l'élément formant boucle (132) à distance de la paroi d'extrémité (133).

3. Ensemble formant coussin gonflable (218) pour retenir par amortissement l'occupant d'un véhicule en cas de choc, l'ensemble formant coussin gonflable (218) comprenant :
un boîtier (242) comportant un intérieur et un extérieur et comprenant au moins un orifice de mise à l'air libre (247) disposé entre l'intérieur et l'extérieur ;
un dispositif de gonflage (240) disposé à l'intérieur du boîtier, le dispositif de gonflage (240) comprenant au moins une ouverture de sortie de gaz (246) et pouvant être activé de manière à évacuer le gaz de gonflement au moment de la survenue de conditions relatives au véhicule prédéterminées ;
un coussin gonflable (220) en communication fluidique avec le dispositif de gonflage (240) de telle sorte que, au moment de l'évacuation du gaz de gonflement provenant du dispositif de gonflage (240), le coussin gonflable soit gonflé dans un état déployé ;
au moins un élément d'attache de retenue de profil (230) relié de manière opérationnelle au coussin gonflable, l'élément d'attache (230) étant en outre ancré de manière détachable au niveau d'un premier emplacement d'ancrage à l'intérieur du boîtier et ancré de manière fixe au niveau d'un second emplacement d'ancrage ; et un élément de blocage de mise à l'air libre mobile (245) pouvant être déplacé de manière sélective en réponse à des conditions relatives à l'occupant prédéterminées afin d'établir une barrière de blocage de gaz entre ladite au moins ouverture de sortie de gaz (246) dans le dispositif de gonflage (240) et ledit au moins orifice de mise à l'air libre (247) dans le boîtier (242), dans lequel l'élément de blocage de mise à l'air libre (245) est relié de manière opérationnelle à un élément formant patte (262) comprenant une partie formant jambe qui fait saillie vers une paroi d'extrémité (233) du boîtier (242), un élément formant canal de boîte stationnaire (260) étant fixé au niveau de la paroi d'extrémité (233) du boîtier (242) et s'étendant vers l'intérieur dans le boîtier (242) dans le sens de déplacement de l'élément de blocage de mise à l'air libre mobile (245), un élément formant pince extensible (256) étant relié de manière opérationnelle audit au moins élément d'attache de retenue de profil (230) et étant adapté pour être inséré dans l'élément formant canal de boîte stationnaire (260) de telle sorte que, au moment de l'insertion de l'élément formant pince extensible (256) dans l'élément formant canal de boîte stationnaire (260), une ouverture de réception de patte (259) à l'intérieur de l'élément formant pince extensible (260) soit alignée avec une ouverture (261) à l'intérieur de l'élément formant canal de boîte stationnaire (260) en étant sensiblement alignée avec la partie formant jambe de l'élément formant patte (262) qui fait saillie vers la paroi d'extrémité (233) du boîtier (242), la partie formant jambe de l'élément formant patte (262) étant normalement disposée à travers l'ouverture (261) alignée à l'intérieur de l'élément formant canal de boîte stationnaire et l'ouverture de réception de patte (259) à l'intérieur de l'élément formant pince extensible (256) de telle sorte qu'une paire de jambes en crochets (257) s'éloignant de l'ouverture de réception de patte (259) soient normalement étendues dans une relation de blocage sous l'élément formant canal de boîte stationnaire (260) de telle sorte que l'élément formant pince extensible (256) soit normalement maintenu à l'intérieur de l'élément formant canal de boîte stationnaire (260) et de telle sorte que, au moment du déplacement de l'élément de blocage de mise à l'air libre mobile (245) à distance de ladite paroi d'extrémité (233), la partie formant jambe de l'élément formant patte (262) soit mise hors de prise de l'élément formant pince extensible (256) et que l'élément formant pince extensible (256) puisse être écarté de l'élément formant canal de boîte stationnaire (260) lorsqu'une tension est appliquée sur ledit au moins élément d'attache de retenue de profil (230).

4. Ensemble formant coussin gonflable (318) pour retenir par amortissement l'occupant d'un véhicule en cas de choc, l'ensemble formant coussin gonflable (318) comprenant :
un boîtier (342) comportant un intérieur et un extérieur et comprenant au moins un orifice de mise à l'air libre (347) disposé entre l'intérieur et l'extérieur ; un dispositif de gonflage (340) disposé à l'intérieur du boîtier (342), le dispositif de gonflage (340) comprenant au moins une ouverture de sortie de gaz (346) et pouvant être activé de manière à évacuer le gaz de gonflement au moment de la survenue de conditions relatives au véhicule prédéterminées ;
un coussin gonflable (320) en communication fluidique avec le dispositif de gonflage (340) de telle sorte que, au moment de l'évacuation du gaz de gonflement provenant du dispositif de gonflage (340), le coussin gonflable (320) soit gonflé dans un état déployé ;
au moins un élément d'attache de retenue de profil (330) relié de manière opérationnelle au coussin gonflable (320), l'élément d'attache étant en outre ancré de manière détachable au niveau d'un premier emplacement d'ancrage à l'intérieur du boîtier (342) et ancré de manière fixe au niveau d'un second emplacement d'ancrage ; et un élément de blocage de mise à l'air libre mobile (345) pouvant être déplacé de manière sélective en réponse à des conditions relatives à l'occupant prédéterminées afin d'établir une barrière de blocage de gaz entre ladite au moins une ouverture de sortie de gaz (346) dans le dispositif de gonflage (340) et ledit au moins orifice de mise à l'air libre (347) dans le boîtier (342), l'élément de blocage de mise à l'air libre (345) étant relié de manière opérationnelle à une extension (346) en forme de fourche s'étendant vers le haut comprenant une première barre verticale (365), une barre transversale (367) qui fait saillie à distance de la première barre verticale (365) vers une paroi d'extrémité (333) du boîtier (342) et à distance du sens de déplacement de l'élément de blocage de mise à l'air libre mobile (345), et une seconde barre verticale (366) s'étendant à distance de la barre transversale (367) à un emplacement plus proche de la paroi d'extrémité (333) que la première barre verticale (365), la paroi d'extrémité comprenant une paire d'éléments formant pattes stationnaires (348) s'étendant vers l'intérieur à distance de la paroi d'extrémité (333) dans une relation vers l'extérieur de l'extension (346) en forme de fourche, les éléments formant pattes stationnaires étant adaptés pour s'étendre à travers un élément formant boucle (332) relié de manière opérationnelle audit au moins élément d'attache de retenue de profil (330) de telle sorte que l'élément formant boucle (332) soit normalement maintenu autour des éléments formant pattes stationnaires (348) et sur la barre transversale (367) entre la première barre verticale (365) et la seconde barre verticale (366) de telle sorte que, au moment du déplacement de l'élément de blocage de mise à l'air libre mobile (345) à distance de ladite paroi d'extrémité (333), la seconde barre verticale (366) tire l'élément formant boucle (332) à distance des éléments formant pattes stationnaires (348).

5. Ensemble formant coussin gonflable (118, 218, 318, 418, 518, 618, 718, 818, 918, 1018, 1218) pour retenir par amortissement l'occupant (14) d'un véhicule (10) en cas de choc, l'ensemble formant coussin gonflable (118, 218, 318, 418, 518, 618, 718, 818, 918, 1018, 1218) comprenant :
un boîtier (142, 242, 342, 442, 542, 642, 742, 842, 942, 1042, 1142, 1242) comportant un intérieur et un extérieur et comprenant au moins un orifice de mise à l'air libre (147, 247, 347, 447, 547, 647, 747, 847, 947, 1047, 1147, 1247) disposé entre l'intérieur et l'extérieur ; un dispositif de gonflage (140, 240, 340, 440, 540, 640, 740, 840, 940, 1040, 1140, 1240) disposé à l'intérieur du boîtier (142, 242, 342, 442, 542, 642, 742, 842, 942, 1042, 1142, 1242), le dispositif de gonflage (140, 240, 340, 440, 540, 640, 740, 840, 940, 1040, 1140, 1240) comprenant au moins une ouverture de sortie de gaz (146, 246, 346, 446, 546, 646, 746, 846, 946, 1046, 1146, 1246) et pouvant être activé de manière à évacuer le gaz de gonflement au moment de la survenue de conditions relatives au véhicule prédéterminées ; un coussin gonflable en communication fluidique avec le dispositif de gonflage (140, 240, 340, 440, 540, 640, 740, 840, 940, 1040, 1140, 1240) de telle sorte que, au moment de l'évacuation du gaz de gonflement provenant du dispositif de gonflage (140, 240, 340, 440, 540, 640, 740, 840, 940, 1040, 1140, 1240), le coussin gonflable soit gonflé dans un état déployé ;
au moins un élément d'attache de retenue de profil (130, 230, 330, 430, 530, 630, 730, 830, 930, 1030, 1130, 1230) relié de manière opérationnelle au coussin gonflable, l'élément d'attache étant en outre ancré de manière détachable au niveau d'un premier emplacement d'ancrage à l'intérieur du boîtier (142, 242, 342, 442, 542, 642, 742, 842, 942, 1042, 1142, 1242) et ancré de manière fixe au niveau d'un second emplacement d'ancrage ; et un élément de blocage de mise à l'air libre mobile (145, 245, 345, 445, 545, 645, 745, 845, 945, 1045, 1145, 1245) pouvant être déplacé de manière sélective en réponse à des conditions relatives à l'occupant prédéterminées afin d'établir une barrière de blocage de gaz entre ladite au moins ouverture de sortie de gaz (146, 246, 346, 446, 546, 646, 746, 846, 946, 1046, 1146, 1246) dans le dispositif de gonflage (140, 240, 340, 440, 540, 640, 740, 840, 940, 1040, 1140, 1240) et ledit au moins orifice de mise à l'air libre (147, 247, 347, 447, 547, 647, 747, 847, 947, 1047, 1147, 1247) dans le boîtier (142, 242, 342, 442, 542, 642, 742, 842, 942, 1042, 1142, 1242), l'élément de blocage de mise à l'air libre (145, 245, 345, 445, 545, 645, 745, 845, 945, 1045, 1145, 1245) étant adapté pour transférer au moins une force dynamique de déplacement par poussée ou par traction audit au moins élément d'attache de retenue de profil (130, 230, 330, 430, 530, 630, 730, 830, 930, 1030, 1130, 1230) au moment du déplacement de l'élément de blocage de mise à l'air libre (145, 245, 345, 445, 545, 645, 745, 845, 945, 1045, 1145, 1245) de telle sorte que ledit au moins élément d'attache de retenue de profil (130, 230, 330, 430, 530, 630, 730, 830, 930, 1030, 1130, 1230) soit déplacé de force depuis ledit premier emplacement d'ancrage par ladite force dynamique de poussée ou de traction sensiblement en même temps que l'établissement d'une barrière de blocage de gaz entre ladite au moins ouverture de sortie de gaz (146, 246, 346, 446, 546, 646, 746, 846, 946, 1046, 1146, 1246) dans le dispositif de gonflage (140, 240, 340, 440, 540, 640, 740, 840, 940, 1040, 1140, 1240) et ledit au moins orifice de mise à l'air libre (147, 247, 347, 447, 547, 647, 747, 847, 947, 1047, 1147, 1247) dans le boîtier (142, 242, 342, 442, 542, 642, 742, 842, 942, 1042, 1142, 1242) de telle sorte qu'un volume plus important de gaz de gonflement soit dirigé dans le coussin gonflable lorsque ledit au moins élément d'attache de retenue de profil (130, 230, 330, 430, 530, 630, 730, 830, 930, 1030, 1130, 1230) est déplacé à partir du premier emplacement d'ancrage et de telle sorte que ledit au moins élément d'attache de retenue de profil (130, 230, 330, 430, 530, 630, 730, 830, 930, 1030, 1130, 1230) soit étendu sur une longueur opérationnelle plus importante s'étendant à distance dudit second emplacement d'ancrage **caractérisé en ce que** l'élément de blocage de mise à l'air libre mobile (445, 545, 645, 745) peut être déplacé de manière sensiblement transversale par rapport au dispositif de gonflage (440, 540, 640, 740).

6. Invention selon la revendication 5, dans laquelle ledit au moins élément d'attache de retenue de profil (430) est fixé sur un élément formant attache de verrouillage (469) maintenu en place par un élément formant pince stationnaire (471) et dans laquelle l'élément de blocage de mise à l'air libre mobile (445) est adapté pour toucher l'élément formant attache de verrouillage (469) lorsqu'il est déplacé par un élément d'entraînement d'application de pression de telle sorte que l'élément de blocage de mise à l'air libre mobile (445) pousse l'élément formant attache de verrouillage (469) pour le mettre hors de prise de l'élément formant pince stationnaire (471).

7. Invention selon la revendication 5, dans laquelle ledit au moins élément d'attache de retenue de profil (530) est fixé à une bague de rupture (575) fixée de manière frangible sur un élément formant base (576) fixé en place à l'intérieur du boîtier (542) et dans laquelle l'élément de blocage de mise à l'air libre mobile (545) est configuré de manière à toucher la bague de rupture (575) lorsqu'il est déplacé par un élément d'entraînement de telle sorte que la bague de rupture (575) soit détachée de l'élément formant base (576) et que ledit au moins élément d'attache de retenue de profil (530) soit étendu de manière correspondante sur une longueur opérationnelle améliorée.

8. Invention selon la revendication 7, dans laquelle la bague de rupture (575) comprend un élément formant pont interne (578) servant à empêcher la mise hors de prise de la bague de rupture dudit au moins élément d'attache de retenue de profil (530).

9. Invention selon la revendication 5, dans laquelle ledit au moins élément d'attache de retenue de profil (630) est fixé sur un élément formant patte (678) fixé à l'intérieur d'un manchon correspondant (679), l'élément formant patte (678) étant maintenu en place à l'intérieur du manchon correspondant (679) par au moins une patte de cisaillement (680) frangible de telle sorte qu'une extrémité distale de l'élément formant patte (678) fasse saillie vers l'extérieur à partir du manchon correspondant (679) et vers l'élément de blocage de mise à l'air libre mobile (645) et dans laquelle l'élément de blocage de mise à l'air libre mobile (645) et est adapté pour toucher l'extrémité distale de l'élément formant patte (678) lorsqu'il est déplacé par un élément d'entraînement de telle sorte que, au moment de l'impact, l'élément de blocage de mise à l'air libre mobile (678) brise la patte de cisaillement (680) et que l'élément formant patte (678) soit dégagé du manchon correspondant (679).

10. Invention selon la revendication 5, dans laquelle ledit au moins élément d'attache de retenue de profil (730) est fixé autour d'un élément formant attache d'ancrage (781) et dans laquelle l'élément de blocage de mise à l'air libre mobile (745) comprend une ouverture principale bordée (782, 782') normalement disposée au dessus de l'attache d'ancrage (781) de telle sorte que ledit au moins élément d'attache de retenue de profil (730) s'étende à distance de l'attache d'ancrage (781) et à travers l'ouverture principale (782, 782') et de telle sorte que, au moment du déplacement de l'élément de blocage de mise à l'air libre mobile (745) sous l'action d'un élément d'entraînement, l'élément de blocage de mise à l'air libre (745) pousse ledit au moins un élément d'attache de retenue de profil (730) à distance de ladite attache d'ancrage (781) et ledit au moins élément d'attache de retenue de profil (730) soit tiré à travers l'ouverture principale (782, 782') lorsqu'une tension est appliquée pendant le gonflement du coussin gonflable (720).

11. Ensemble formant coussin gonflable (818, 918) pour retenir par amortissement l'occupant d'un véhicule en cas de choc, l'ensemble formant coussin gonflable comprenant :
un boîtier (842, 942) comportant un intérieur et un extérieur et comprenant au moins un orifice de mise à l'air libre (847, 947) disposé entre l'intérieur et l'extérieur ;
un dispositif de gonflage (840, 940) disposé à l'intérieur du boîtier (842, 942), le dispositif de gonflage (840, 940) comprenant au moins une ouverture de sortie de gaz (846, 946) et pouvant être activé de manière à évacuer le gaz de gonflement au moment de la survenue de conditions relatives au véhicule prédéterminées ;
un coussin gonflable (820, 920) en communication fluidique avec le dispositif de gonflage (840, 940) de telle sorte que, au moment de l'évacuation du gaz de gonflement provenant du dispositif de gonflage (840, 940), le coussin gonflable soit gonflé dans un état déployé ;
au moins un élément d'attache de retenue de profil (830, 930) relié de manière opérationnelle au coussin gonflable (820, 920), l'élément d'attache étant en outre ancré de manière détachable au niveau d'un premier emplacement d'ancrage à l'intérieur du boîtier (842, 942) ; et un élément de blocage de mise à l'air libre mobile (845, 945) pouvant être déplacé de manière sélective en réponse à des conditions relatives à l'occupant prédéterminées afin d'établir une barrière de blocage de gaz entre ladite au moins une ouverture de sortie de gaz (846, 946) dans le dispositif de gonflage (840, 940) et ledit au moins orifice de mise à l'air libre (847, 947) dans le boîtier (842, 942), dans lequel l'élément de blocage de mise à l'air libre mobile (845, 945) peut être déplacé par coulissement le long d'une paroi latérale du boîtier (842, 942) adjacente audit dispositif de gonflage (840, 940), dans lequel l'élément de blocage de mise à l'air libre mobile (845) comprend une structure formant plaque allongée portée à l'intérieur d'un canal de support (883) s'étendant le long de ladite paroi latérale, l'élément de blocage de mise à l'air libre mobile (845) comprenant une extrémité proximale reliée de manière opérationnelle à un élément d'entraînement générateur de force pouvant être activé de manière à déplacer l'élément de blocage de mise à l'air libre mobile (845) à l'intérieur du canal de support, l'élément de blocage de mise à l'air libre mobile (845) comprenant en outre une extrémité distale faisant saillie dans le sens de déplacement et des bords latéraux s'étendant entre les extrémités proximale et distale, dans lequel une fente principale (885) s'étend vers l'intérieur à partir d'un premier bord latéral parmi les bords latéraux, ladite fente principale (885) comprenant une partie avant (886) faisant saillie vers l'extrémité distale de l'élément de blocage de mise à l'air libre mobile, et dans laquelle un élément formant patte de retenue d'attache (848) fait saillie à distance de ladite paroi latérale et dans l'intérieur du boîtier (842), l'élément formant patte de retenue d'attache (848) s'étendant normalement à travers la partie avant (886) de ladite fente principale (885), ledit au moins élément d'attache de retenue de profil (830) comprenant un élément formant boucle normalement disposé par coulissement sur l'élément formant patte de retenue d'attache (848) de telle sorte qu'une partie dudit au moins élément d'attache de retenue de profil (830) s'étende normalement entre ladite paroi latérale et une partie de l'élément de blocage de mise à l'air libre mobile (845) adjacente à la partie avant (886) de ladite fente principale (885), la fente principale (885) comprenant en outre une partie ouverte qui s'étend à distance dudit premier bord latéral parmi les bords latéraux de telle sorte que, au moment du déplacement activé de l'élément de blocage de mise à l'air libre mobile dans le sens de l'extrémité distale, la partie ouverte de la fente principale soit déplacée sur l'élément formant patte de retenue d'attache (848), moyennant quoi ledit au moins un élément d'attache de retenue de profil (830) est dégagé de la constriction entre ladite paroi latérale et l'élément de blocage de mise à l'air libre mobile (845) de telle sorte que ledit au moins un élément d'attache de retenue de profil puisse s'éloigner en coulissant de l'élément formant patte de retenue d'attache (848) au moment de l'application d'une force de tension.

12. Invention selon la revendication 11, dans laquelle l'élément formant patte de retenue d'attache (848) est incliné vers le haut.

13. Invention selon la revendication 11, dans laquelle l'élément de blocage de mise à l'air libre mobile (945) comprend une structure formant plaque allongée portée à l'intérieur d'un canal de support (983) s'étendant le long de ladite paroi latérale, l'élément de blocage de mise à l'air libre mobile (945) comprenant une extrémité proximale reliée de manière opérationnelle à un élément d'entraînement générateur de force (973) pouvant être activé de manière à déplacer l'élément de blocage de mise à l'air libre mobile (945) à l'intérieur du canal de support, l'élément de blocage de mise à l'air libre mobile (945) comprenant en outre une extrémité distale faisant saillie dans le sens de déplacement, dans lequel un élément formant pince stationnaire (989) est fixé sur ladite paroi latérale dans une relation de chevauchement par rapport à l'élément de blocage de mise à l'air libre mobile (945), l'élément formant pince stationnaire (989) comprenant une projection formant doigt (990) qui fait saillie dans le sens de déplacement de l'élément de blocage de mise à l'air libre mobile (945), ledit au moins un élément d'attache de retenue de profil comprenant un élément formant boucle normalement disposé par coulissement sur la projection formant doigt, ledit au moins un élément d'attache de retenue de profil étant en outre relié par un élément de fixation frangible (988) à une partie de l'élément de blocage de mise à l'air libre mobile (945) de telle sorte que, au moment du déplacement activé de l'élément de blocage de mise à l'air libre mobile (945) dans le sens de l'extrémité distale, l'élément de fixation frangible (988) transporte ledit au moins un élément d'attache de retenue de profil (930) à distance de la projection formant doigt (990) et soit par la suite maintenu en place par l'élément de fixation frangible (988) jusqu'à ce qu'il soit dégagé par l'application d'une force de tension.

14. Ensemble formant coussin gonflable (1018) pour retenir par amortissement l'occupant d'un véhicule en cas de choc, l'ensemble formant coussin gonflable comprenant :
un boîtier (1042) comportant un intérieur et un extérieur et comprenant au moins un orifice de mise à l'air libre (1047) disposé entre l'intérieur et l'extérieur ;
un dispositif de gonflage (1040) disposé à l'intérieur du boîtier (1042), le dispositif de gonflage (1040) comprenant au moins une ouverture de sortie de gaz (1046) et pouvant être activé de manière à évacuer le gaz de gonflement au moment de la survenue de conditions relatives au véhicule prédéterminées ;
un coussin gonflable (1020) en communication fluidique avec le dispositif de gonflage (1040) de telle sorte que, au moment de l'évacuation du gaz de gonflement provenant du dispositif de gonflage (1040), le coussin gonflable soit gonflé dans un état déployé ;
au moins un élément d'attache de retenue de profil (1030) relié de manière opérationnelle au coussin gonflable (1020), l'élément d'attache (1030) étant en outre ancré de manière détachable au niveau d'un premier emplacement d'ancrage à l'intérieur du boîtier (1042) ; et un élément de blocage de mise à l'air libre mobile (1045) pouvant être déplacé de manière sélective en réponse à des conditions relatives à l'occupant prédéterminées afin d'établir une barrière de blocage de gaz entre ladite au moins ouverture de sortie de gaz (1046) dans le dispositif de gonflage (1040) et ledit au moins orifice de mise à l'air libre (1047) dans le boîtier,
dans lequel l'élément de blocage de mise à l'air libre mobile (1045) peut être déplacé par rotation au moins partiellement autour dudit dispositif de gonflage (1040) dans une relation de chevauchement par rapport à ladite au moins ouverture de sortie de gaz (1046) et dans lequel l'élément d'attache (1030) est dégagé de manière concourante dudit premier emplacement d'ancrage à l'intérieur du boîtier (1042) et étendu sur une longueur opérationnelle plus importante.
